# EUROPEAN PATENT APPLICATION

(11) **EP 2 924 074 A1**
(43) Date of publication of application: **30.09.2015**
(21) Application number: 14786116.5
(22) Date of filing: 28.02.2014
(51) Int. Cl.: C08L 79/08, B32B 27/34, C08J 5/18, C08K 5/04

(54) **IMIDE GROUP-CONTAINING COMPOUND SOLUTION AND PRODUCTION METHOD FOR POLYIMIDE FILM DERIVED FROM IMIDE GROUP-CONTAINING COMPOUND SOLUTION**

(30) Priority: 27.11.2013 JP 2013245099
(71) Applicant: Nakata Coating Co., Ltd., Yokohama-shi, Kanagawa 240-0041 (JP)
(72) Inventor: MATSUNO Takemi, Yokohama-shi Kanagawa 240-0041 (JP); KITAGAWA Katsuji, Yokohama-shi Kanagawa 240-0041 (JP); HANAZONO Misao, Yokohama-shi Kanagawa 240-0041 (JP)
(74) Representative: Müller-Boré & Partner Patentanwälte PartG mbB
(86) International application number: PCT/JP2014/055017
(87) International publication number: WO 2015/079717

(57) **Abstract**

Provided is an imide group-containing compound solution which includes an imide group-containing compound obtained by partially hydrolyzing a polyimide molded article, a solvent, and a viscosity stabilizer and is excellent in long-term storage stability.

It is an imide group-containing compound solution including an imide group-containing compound obtained by partially hydrolyzing a polyimide molded article, a solvent, and a viscosity stabilizer. In the imide group-containing compound solution, an absorption peak derived from an imide group is observed at a wavenumber of 1,375 cm⁻¹, an absorption peak derived from an amide group is observed at a wavenumber of 1,600 cm⁻¹, and an absorption peak derived from a carboxyl group is observed at a wavenumber of 1,413 cm⁻¹ in an infrared spectroscopy chart obtained by an infrared spectroscopic measurement of the imide group-containing compound and the viscosity stabilizer is an orthocarboxylic ester and a chelating agent or either one of the two.

## Description

### TECHNICAL FIELD

The present invention relates to an imide group-containing compound solution and a method for producing a polyimide film derived from an imide group-containing compound solution.

In particular, the invention relates to an imide group-containing compound solution exhibiting a small increase in viscosity during storage and excellent storage stability and an efficient method for producing a polyimide film derived from an imide group-containing compound solution.

### BACKGROUND ART

Hitherto, polyimide molded articles represented by polyimide films are insoluble in various kinds of solvents due to the excellent chemical resistance thereof and hardly recycled by melting unlike thermoplastic plastics such as polystyrene due to a high melting point thereof.

For this reason, the polyimide molded articles are mostly discarded by landfill disposal or incineration despite a high price and thus have a problem of being poor in recyclability or environmental properties.

In view of such a circumstance, various methods have been proposed in which the polyimide molded articles to be discarded are recycled by the chemical hydrolysis.

For example, it has been proposed that aromatic polyimide molded articles are completely hydrolyzed in the coexistence of an alkali at a predetermined concentration under a predetermined temperature condition so as to obtain an aromatic tetracarboxylic dianhydride and an aromatic diamine of the raw materials (see Patent Document 1).

More specifically, it is a polyimide treatment method in which aromatic polyimide molded articles are hydrolyzed at from 150 to 230°C in the coexistence of an alkali as much as from 4 to 4.8 times the polyimide unit to obtain an aromatic tetracarboxylic dianhydride and an aromatic diamine of the raw materials, these alkali aqueous solution and acid aqueous solution are further treated with activated carbon, and then the equivalent amounts of acid and alkali are introduced thereinto so as to precipitate an aromatic tetracarboxylic dianhydride and an aromatic diamine, thereby performing the separation and recovery thereof.

In addition, a method has been proposed in which a polyimide having a predetermined structure is hydrolyzed in the presence of water or an alcohol under a high temperature and high pressure condition so as to obtain a low molecular weight substance as a polyimide raw material (see Patent Document 2).

More specifically, it is a decomposition method of polyimide in which a polyimide or a polyamic acid of the precursor thereof is hydrolyzed in the presence of water or an alcohol in a supercritical state of, for example, 250 to 350°C and 10 to 100 MPa so as to obtain a low molecular weight substance such as an aromatic tetracarboxylic dianhydride or an aromatic diamine as a polyimide raw material.

In addition, a method has been proposed in which a metal component is recovered from a polymer-containing solid containing a polyimide or the like and a metal component by the decomposition treatment of the polyimide or the like (see Patent Document 3).

More specifically, it is a method in which a polymer-containing solid such as a polyimide is brought into contact with a polymer decomposition material containing a solvent having a solubility parameter of 18 (MJ/m³)^{1/2} or more at a temperature of 200°C or higher so as to decompose and remove the polymer-containing solid and to efficiently recover the residual metal component (copper).

Furthermore, a method has been proposed in which a polyimide as the industrial waste is hydrolyzed using a large amount of basic substance under a low temperature and normal pressure condition so as to recover a predetermined polyimide raw material as the recycling raw material (see Patent Document 4).

More specifically, it is a method in which a basic substance (alkali metal hydroxide or the like) capable of producing a hydroxyl ion is added to a polyimide in a molar amount of from 20 to 80 times the theoretical molar amount of imide group, then the polyimide is hydrolyzed at a predetermined temperature (40 to 95°C) under a normal pressure condition, and further the resultant is neutralized with an acidic substance, thereby a polyimide raw material such as pyromellitic acid or an aromatic amine is recovered.

### CITATION LIST

### PATENT DOCUMENT

Patent Document 1: JP 60-81154 A (claims)
Patent Document 2: JP 4,432,175 B1 (claims)
Patent Document 3: JP 2002-256104 A (claims)
Patent Document 4: JP 2006-124530 A (claims)

### DISCLOSURE OF THE INVENTION

### PROBLEM TO BE SOLVED BY THE INVENTION

However, the regeneration method of polyimide molded articles, or the like described in Patent Documents 1 to 4 is basically intended to obtain a polyimide raw material or a residual metal material by the complete hydrolysis of polyimide.

Hence, it is not intended at all to obtain an imide group-containing compound having a specific structure which is low-temperature curable and exhibits favorable solubility or adhesiveness by partially hydrolyzing the polyimide molded articles.

More specifically, Patent Document 1 is a polyimide treatment method to separate and recover an aromatic tetracarboxylic dianhydride and an aromatic diamine by the precipitation thereof and it is not considered at all to obtain an imide group-containing compound having a specific structure.

In addition, Patent Document 2 is a polyimide treatment method to obtain an aromatic tetracarboxylic dianhydride, an aromatic diamine or the like as a polyimide raw material by hydrolyzing a polyimide in a supercritical state of a predetermined temperature and a predetermined pressure and it is not considered at all to obtain an imide group-containing compound having a specific structure.

In addition, Patent Document 3 is a polyimide treatment method to efficiently recover a residual metal component after the decomposition and removal of a polymer solid such as a polyimide and it is not considered at all to obtain an imide group-containing compound having a specific structure.

Furthermore, Patent Document 4 is a polyimide treatment method to recover a polyimide raw material such as pyromellitic acid or an aromatic amine and it is not considered at all to obtain an imide group-containing compound having a specific structure.

Moreover, in the regeneration method of polyimide molded articles, or the like of Patent Documents 1 to 4, it is not intended at all to further lower the curing temperature at the time of regenerating a polyimide from the hydrolyzate by containing a predetermined reaction accelerator (specific metal species).

On the other hand, there has been observed a problem that both the polyimide raw material and the imide group-containing compound which is disclosed in Patent Documents 1 to 4 and obtained by the hydrolysis is prone to increase in viscosity significantly along with the elapse of time and finally to gel (including pseudo-crosslinking by a hydrogen bond or the like) in the case of being stored in a solution state.

Accordingly, there has been observed a problem that the imide group-containing compound solution obtained can be uniformly coated on a substrate only immediately after the production and thus the use thereof is greatly limited.

In view of such a circumstance, the present inventors of the invention has conducted intensive investigations, and as a result, it has been found out that an increase in viscosity is suppressed to a low extent even in a solution state by partially hydrolyzing a polyimide molded article as the industrial waste and also preparing an imide group-containing compound solution containing an imide group-containing compound having a specific structure having a predetermined infrared absorption peak, a solvent and a viscosity stabilizer, thereby the invention has been completed.

In other words, an object of the invention is to provide an imide group-containing compound solution, which contains an imide group-containing compound capable of low-temperature curing or the like, exhibits a small increase in viscosity during storage and excellent storage stability, and an efficient method for producing a polyimide film derived from such an imide group-containing compound solution.

### MEANS FOR SOLVING PROBLEM

According to the invention, there is provided an imide group-containing compound solution including an imide group-containing compound obtained by partially hydrolyzing a polyimide molded article, a solvent, and a viscosity stabilizer, in which an absorption peak derived from an imide group is observed at a wavenumber of 1,375 cm⁻¹, an absorption peak derived from an amide group is observed at a wavenumber of 1,600 cm⁻¹, and an absorption peak derived from a carboxyl group is observed at a wavenumber of 1,413 cm⁻¹ in an infrared spectroscopy chart obtained by an infrared spectroscopic measurement of the imide group-containing compound, and in which the viscosity stabilizer is an orthocarboxylic ester and a chelating agent or either one of the two. Hence, the problem described above can be solved.

In other words, it is possible to obtain an imide group-containing compound solution exhibiting a small increase in viscosity during storage and excellent storage stability by preparing an imide group-containing compound solution containing an imide group-containing compound having a predetermined infrared absorption peak, a solvent, and a predetermined viscosity stabilizer as well as partially hydrolyzing a polyimide molded article such as the industrial waste.

In addition, an imide group-containing compound derived from an imide group-containing compound solution is low-temperature curable and exhibits excellent solubility in various kinds of organic solvents, and moreover can exhibit excellent adhesiveness to various kinds of substrates.

Further, an imide group-containing compound derived from such an imide group-containing compound solution can be thermally polymerized into a predetermined polyimide resin by the thermal curing under a predetermined condition, and it has been demonstrated that a polyimide resin exhibiting heat resistance or the like equivalent to those of a polyimide resin of the related art is obtained at a cost which is 1/10 or less of the cost for producing the polyimide resin of the related art. Consequently, it can be said that it is significantly advantageous in terms of economy when the imide group-containing compound is used as a raw material of a polyimide resin.

Meanwhile, it can be confirmed whether the polyimide molded article is partially hydrolyzed or not by the fact that the absorption peak derived from an imide group, the absorption peak derived from an amide group, and the absorption peak derived from a carboxyl group are observed described above in an infrared spectroscopy chart.

Upon constituting the imide group-containing compound solution of the invention, it is preferable that the viscosity stabilizer is at least one selected from the group consisting of methyl orthoformate, triethyl orthoformate, tripropyl orthoformate, tributyl orthoformate, phytic acid, tannic acid, and gallic acid.

The increase in viscosity can be effectively suppressed even with a relatively small blending amount of viscosity stabilizer according to the constitution in which the kind of the viscosity stabilizer is limited in this way.

Upon constituting the imide group-containing compound solution of the invention, it is preferable that the blending amount of the viscosity stabilizer is a value within the range of from 0.1 to 20 parts by weight with respect to 100 parts by weight of the imide group-containing compound.

The possibility that the reactivity or the like of the imide group-containing compound to be obtained is inhibited by the viscosity stabilizer is reduced as well as an increase in viscosity can be certainly suppressed according to the constitution in which the blending amount of the viscosity stabilizer is limited within this range.

Upon constituting the imide group-containing compound solution of the invention, it is preferable that the solvent is water and N-methyl-2-pyrrolidone (NMP) or either one of them.

It is possible to improve the solubility of the imide group-containing compound or to further improve the safety or stability of the imide group-containing compound solution by limiting the kind of the solvent in this way.

Upon constituting the imide group-containing compound solution of the invention, it is preferable that the imide group-containing compound solution further contains a thermosetting resin, in which the thermosetting resin is at least one kind selected from the group consisting of an epoxy resin, a fluorine resin, a phenol resin, a silicone resin, a urethane resin, an olefin resin, a polyester resin, and a polyamide resin.

It is possible to adjust the reactivity of the imide group-containing compound and the mechanical properties of the polyimide film thus obtained into a desired range by further containing a thermosetting resin as described above.

Upon constituting the imide group-containing compound solution of the invention, it is preferable that the ratio of S1/S2 is a value within the range of from 2 to 10 when the height of the absorption peak derived from a benzene ring at the wavenumber of 1,500 cm⁻¹ is denoted as S1 and the height of the absorption peak derived from an imide group at the wavenumber of 1,375 cm⁻¹ is denoted as S2 in the infrared spectroscopy chart.

It is possible to have an indicator to confirm whether the polyimide molded article is partially hydrolyzed or not as well as it is possible to obtain an imide group-containing compound which is derived from the imide group-containing compound solution and low-temperature curable according to such a constitution.

Meanwhile, there is a case in which the absorption peak (base peak) derived from the benzene ring is not observed at the wavenumber of 1,500 cm⁻¹ depending on the kind of the polyimide constituting the polyimide molded article, namely, the kind of the imide group-containing compound obtained by the partial hydrolysis. Hence, it is possible to take another absorption peak as the base peak instead of the absorption peak derived from the benzene ring at the wavenumber of 1,500 cm⁻¹ in such a case.

Upon constituting the imide group-containing compound solution of the invention, it is preferable that the ratio of S1/S3 is a value within the range of from 2 to 20 when the height of the absorption peak derived from a benzene ring at the wavenumber of 1,500 cm⁻¹ is denoted as S1 and the height of the absorption peak derived from an amide group at the wavenumber of 1,600 cm⁻¹ is denoted as S3 in the infrared spectroscopy chart.

It is possible to have an indicator to confirm whether the polyimide molded article is partially hydrolyzed or not as well as it is possible to obtain an imide group-containing compound which is derived from the imide group-containing compound solution and exhibits further excellent solubility in predetermined organic solvents and adhesiveness to various kinds of substrates according to such a constitution.

Upon constituting the imide group-containing compound solution of the invention, it is preferable that the ratio of S1/S4 is a value within the range of from 8 to 30 when the height of the absorption peak derived from a benzene ring at the wavenumber of 1,500 cm⁻¹ is denoted as S1 and the height of the absorption peak derived from a carboxyl group at the wavenumber of 1,413 cm⁻¹ is denoted as S4 in the infrared spectroscopy chart.

It is possible to have an indicator to confirm whether the polyimide molded article is partially hydrolyzed or not as well as it is possible to obtain an imide group-containing compound which is derived from the imide group-containing compound solution and exhibits further excellent solubility in predetermined organic solvents and adhesiveness to various kinds of substrates according to such a constitution.

According to another aspect of the invention, there is provided a method for producing a polyimide film derived from an imide group-containing compound solution, and the method for producing a polyimide film is a method for producing a polyimide film derived from an imide group-containing compound solution, the method including the following processes (1) and (2):
process (1): a process of forming a coated material by coating, on a substrate, an imide group-containing compound solution which includes an imide group-containing compound obtained by partially hydrolyzing a polyimide molded article, a solvent, and a viscosity stabilizer, the imide group-containing compound having an absorption peak derived from an imide group at a wavenumber of 1,375 cm⁻¹, an absorption peak derived from an amide group at a wavenumber of 1,600 cm⁻¹, and an absorption peak derived from a carboxyl group at a wavenumber of 1,413 cm⁻¹ in an infrared spectroscopy chart obtained by an infrared spectroscopic measurement of the imide group-containing compound, and the viscosity stabilizer being an orthocarboxylic ester and a chelating agent or either one of the two; and
process (2): a process of forming a polyimide film by heat-treating the coated material thus formed.
It is possible to efficiently obtain a polyimide film exhibiting stabilized thermal properties, mechanical properties or the like by implementing the method for producing a polyimide film as described above.
In other words, it is possible to efficiently obtain a polyimide film exhibiting a small increase in viscosity during storage and stabilized thermal properties, mechanical properties or the like since a predetermined viscosity stabilizer is contained in the imide group-containing compound solution.

In addition, upon implementing the method for producing a polyimide film derived from an imide group-containing compound solution of the invention, it is preferable that the coated material is formed on a substrate having a surface treated.

It is possible to efficiently obtain a polyimide film further excellent in adhesiveness by implementing the method for producing a polyimide film as described above.

In addition, upon implementing the method for producing a polyimide film derived from an imide group-containing compound solution of the invention, it is preferable that the coated material is formed on a substrate having a metal layer.

It is possible to efficiently obtain a polyimide film further having a metal layer therein as a circuit board exhibiting a shielding effect or a finished product or intermediate product such as a multilayer board having an internal circuit by implementing the method for producing a polyimide film as described above.

### BRIEF DESCRIPTION OF DRAWINGS

Fig. 1 is an infrared spectroscopy chart of an imide group-containing compound (compound A) according to the invention (Example 1);
Fig. 2 is an infrared spectroscopy chart of the cured material (polyimide resin) of an imide group-containing compound (compound A) according to the invention (Example 1);
Fig. 3 is a diagram provided to describe the relation between the time elapsed (days) and the viscosity (mPa·sec) of the imide group-containing compound solution during storage;
Fig. 4 is a diagram provided to describe the relation between the blending amount (% by weight) of a viscosity stabilizer (trimethyl orthoformate) in the imide group-containing compound solution and the viscosity (mPa·sec) thereof;
Fig. 5 is a diagram provided to describe the relation between the blending amount (% by weight) of a viscosity stabilizer (triethyl orthoformate) in the imide group-containing compound solution and the viscosity (mPa·sec) thereof;
Figs. 6A to 6E are diagrams provided to describe the aspects of the use of an imide group-containing compound;
Fig. 7 is an infrared spectroscopy chart of a commercially available polyimide (Kapton H).
Fig. 8 is a chart of differential thermal balance analysis (TG-DTA curve) of the cured material (polyimide resin) of an imide group-containing compound (compound A) according to the invention (Example 1);
Fig. 9 is an infrared spectroscopy chart of an imide group-containing compound (compound B) according to the invention (Example 2);
Fig. 10 is an infrared spectroscopy chart of the thermosetting material (polyimide resin) of an imide group-containing compound (compound B) according to the invention (Example 2);
Fig. 11 is an infrared spectroscopy chart of an imide group-containing compound (compound C) according to the invention (Example 3);
Fig. 12 is an infrared spectroscopy chart of the thermosetting material (polyimide resin) of an imide group-containing compound (compound C) according to the invention (Example 3);
Figs. 13A and 13B are diagrams (photographs) provided to describe the state of the polyimide films (thermosetting materials) of Example 1 and Example 4 according to the invention; and
Fig. 14 is an infrared spectroscopy chart of an imide group-containing compound (compound D) of Comparative Example 2.

### MODE(S) FOR CARRYING OUT THE INVENTION

### [First embodiment]

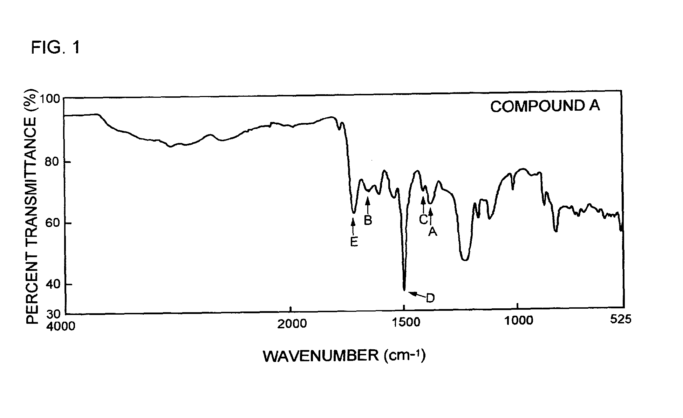

As the infrared spectroscopy chart is illustrated in Fig. 1, the first embodiment is an imide group-containing compound solution including an imide group-containing compound obtained by partially hydrolyzing a polyimide molded article, a solvent, and a viscosity stabilizer. In the imide group-containing compound solution, an absorption peak (peak A) derived from an imide group is observed at a wavenumber of 1,375 cm⁻¹, an absorption peak (peak B) derived from an amide group is observed at a wavenumber of 1,600 cm⁻¹, and an absorption peak (peak C) derived from a carboxyl group is observed at a wavenumber of 1,413 cm⁻¹ in an infrared spectroscopy chart obtained by the infrared spectroscopic measurement of the imide group-containing compound and the viscosity stabilizer is an orthocarboxylic ester and a chelating agent or either one of them.

In addition, an absorption peak (peak D) derived from the carbon of a benzene ring is observed at a wavenumber of 1,500 cm⁻¹ and an absorption peak (peak E) derived from a carbonyl group is observed at a wavenumber 1,710 cm⁻¹ in the infrared spectroscopy chart of the imide group-containing compound, and these peaks can be used as base peak at the time of performing the qualitative analysis (identification) of the compound.

### 1. Polyimide molded article

Upon producing an imide group-containing compound by the partial hydrolysis, a polyimide molded article which has been treated as the industrial waste in the related art is widely employed as a raw material.

Hence, examples of the suitable polyimide molded article may include a polyimide film, a polyimide coating, a polyimide-based resist, a polyimide electrical part enclosure, a polyimide electronic part material, a polyimide container, a polyimide machine part, and a polyimide automobile part.

Moreover, a composite laminate such as a circuit board having a metal circuit pattern formed on the polyimide film surface or a TAB tape can also be used as a polyimide molded article as the raw material at the time of the production of the imide group-containing compound of the invention.

### 2. Partial hydrolysis

In addition, the imide group-containing compound of the invention is a partial hydrolyzate of a polyimide molded article having a predetermined structure as the infrared spectroscopy chart is illustrated in Fig. 1.

In other words, it is an imide group-containing compound obtained by partially hydrolyzing a polyimide molded article having a predetermined size in the presence of water and a basic compound under a temperature condition of from 50 to 100°C although it is an example, and the imide group-containing compound which has a predetermined structure and is represented by the following Formula (1) is the target.

More specifically, an imide group-containing compound is suitable which has a polyamic acid structure A and a mixture C of a polyamic acid structure and an alkali soap structure at or in the vicinity of both terminals thereof and has a polyimide structure B between these structures A and C.

Consequently, by having at least an imide group, an amide group, and a carboxyl group, and further a carbonyl group or the like in the molecule composed of a carbon atom, or the like, it is possible to obtain an imide group-containing compound which is low-temperature curable and exhibits excellent solubility in various kinds of organic solvents or adhesiveness.

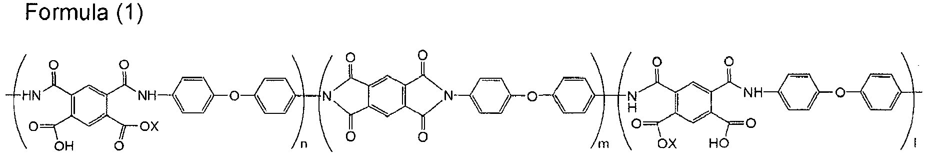

(In Formula (1), the symbol X represents an alkali metal (Lithium/Li, sodium/Na, potassium/K, rubidium/Rb, or cesium/Ce) or the like, the subscript n and 1 represent a symbol that denotes the abundance (number of moles) of the polyamic acid structure located on the both sides of the polyimide structure and are usually a value within the range of from 0.1 to 0.8, and the subscript m represents a symbol that indicates the abundance (number of moles)of the polyamide structure and is usually a value within the range of from 0.2 to 0.9.)

In addition, it is estimated that the imide group-containing compound has a predetermined structure at the molecular terminal as represented by the following Formula (2).

In other words, it is estimated that the molecular terminal structure is constituted with one or a combination of a polyamic acid structure denoted by the symbol A, a mixture of a polyamic acid and an alkali soap structure denoted by the symbol B, and an alkali soap structure denoted by the symbol C.

Consequently, it is possible to obtain an imide group-containing compound which is further lower-temperature curable and exhibits further excellent solubility in various kinds of organic solvents or adhesiveness by having such a molecular terminal.

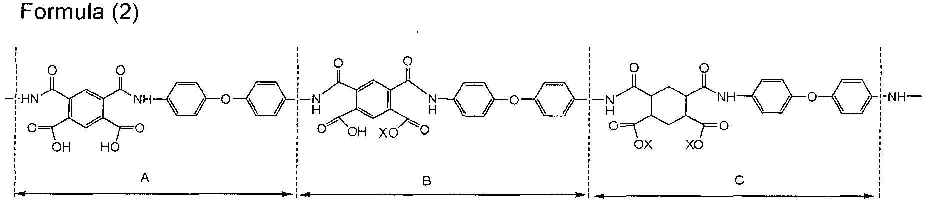

However, the imide group-containing compound does not necessarily contain the imide group, the amide group, and the carboxyl group in one molecule composed of a carbon atom at the same time but may be a mixture of a polyimide having an imide group represented by the following Formula (3)-1, a polyamic acid having an amide group represented by the following Formula (3)-2, and a carboxylic acid compound having a carboxyl group represented by the following Formula (3)-3.

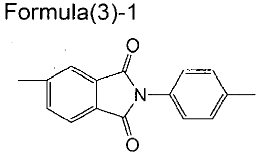

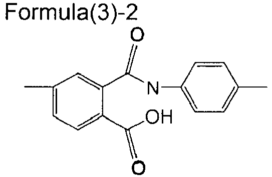

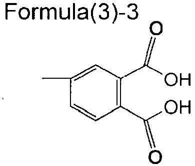

### 3. Infrared spectroscopy chart

### (1) Imide group

In addition, the imide group-containing compound of the invention has an absorption peak derived from an imide group at the wavenumber of 1,375 cm⁻¹ or in the vicinity thereof in the infrared spectroscopy chart obtained by the infrared spectroscopic measurement as illustrated in Fig. 1.

The reason for this is because it is possible to obtain an imide group-containing compound which is lower-temperature curable and thus to exhibit a predetermined heat resistance in a case in which a polyimide resin having a high molecular weight is obtained by the thermal curing treatment by having an imide group in the molecule as described above.

Meanwhile, it is also possible to use the quantity (peak height) of the imide group in the imide group-containing compound of the invention as an indicator indicating the degree of partial hydrolysis as illustrated in the infrared spectroscopy chart of Fig. 1.

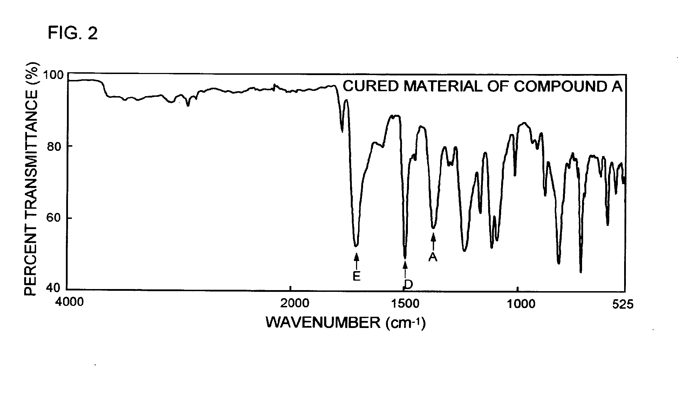

In addition, the quantity (peak height) of the imide group in the imide group-containing compound of the partial hydrolysis is defined as the simple imidization rate when the quantity (peak height) of the imide group in the infrared spectroscopy chart of the polyimide after curing illustrated in Fig. 2 or the like is 100, and it has been demonstrated that the simple imidization rate is preferably a value within the range of from 10 to 50, more preferably a value within the range of from 15 to 45, and even more preferably a value within the range of from 20 to 40.

Moreover, when the ratio (S2'/S1') of the peak height (S2') at the wavenumber of 1,375 cm⁻¹ derived from the imide group in polyimide after curing to the peak height (S1') at the wavenumber of 1,500 cm⁻¹ derived from the benzene ring in the polyimide after curing in the infrared spectroscopy chart is 100, the proportion of the peak ratio (S2/S1) of those in the imide group-containing compound of the partial hydrolysis can also be defined as the imidization rate as to be described below. Even in this case, it has been demonstrated that the imidization rate is preferably a value within the range of from 20 to 55, more preferably a value within the range of from 30 to 50, and even more preferably a value within the range of from 38 to 48.

### (2) Amide group

In addition, the imide group-containing compound of the invention has an absorption peak derived from an amide group at the wavenumber of 1,600 cm⁻¹ or in the vicinity thereof as illustrated in Fig. 1.

The reason for this is because it is possible to obtain an imide group-containing compound which is lower-temperature curable by having an amide group in the molecule as described above.

Meanwhile, it has been demonstrated that an absorption peak attributed to the amide group is not observed in the polyimide obtained by curing as illustrated in Fig. 2 or the like although a distinctive absorption peak (wavenumber of 1,600 cm⁻¹) attributed to the amide group is observed in the imide group-containing compound of the invention as illustrated in the infrared spectroscopy chart of Fig. 1.

### (3) Carboxyl group

In addition, the imide group-containing compound of the invention has an absorption peak derived from a carboxyl group at the wavenumber of 1,413 cm⁻¹ or in the vicinity thereof as illustrated in Fig. 1.

The reason for this is because it is possible to obtain an imide group-containing compound exhibiting favorable solubility or adhesiveness by having a carboxyl group in the molecule as described above.

Meanwhile, it has been demonstrated that an absorption peak attributed to the carboxyl group is not observed in the polyimide obtained by curing as illustrated in Fig. 2 or the like although an absorption peak (wavenumber of 1,413 cm⁻¹) attributed to the carboxyl group is observed in the imide group-containing compound of the invention as illustrated in the infrared spectroscopy chart of Fig. 1.

### (4) Carbonyl group

In addition, it is preferable that the imide group-containing compound of the invention has an absorption peak derived from a carbonyl group at the wavenumber of 1,710 cm⁻¹ or in the vicinity thereof as illustrated in Fig. 1.

The reason for this is because it is possible to obtain an imide group-containing compound exhibiting more favorable solubility by having a carbonyl group in the molecule as described above.

Meanwhile, it is also possible to use the quantity (peak height) of the carbonyl group in the imide group-containing compound of the invention as an indicator indicating the degree of partial hydrolysis as illustrated in the infrared spectroscopy chart of Fig. 1, and it has been demonstrated that the quantity (peak height) of the carbonyl group is preferably a value in the range of from 30 to 70, more preferably a value in the range of from 35 to 60, and even more preferably a value in the range of from 40 to 50 when the quantity (peak height) of the carbonyl group in the infrared spectroscopy chart of the polyimide illustrated in Fig. 2 or the like is 100.

### (5) Ratio to benzene ring

### (5)-1 S1/S2

In addition, it is preferable that the ratio (or proportion) of S1/S2 is a value within the range of from 2 to 10 when the height of the absorption peak derived from a benzene ring at the wavenumber of 1,500 cm⁻¹ is denoted as S1 and the height of the absorption peak derived from an imide group at the wavenumber of 1,375 cm⁻¹ is denoted as S2 in the infrared spectroscopy chart of the imide group-containing compound of the invention.

The reason for this is because it is also possible to use the ratio of S1/S2 as an indicator indicating the degree of partial hydrolysis as well as it is possible to obtain an imide group-containing compound which is lower-temperature curable by regulating the abundance proportion of the imide group as described above.

Consequently, the ratio of S1/S2 is more preferably a value within the range of from 3 to 8 and even more preferably a value within the range of from 5 to 7.

### (5)-2 S1/S3

In addition, it is preferable that the ratio(or proportion) of S1/S3 is a value within the range of from 2 to 20 when the height of the absorption peak derived from a benzene ring at the wavenumber of 1,500 cm⁻¹ is denoted as S1 and the height of the absorption peak derived from an amide group at the wavenumber of 1,600 cm⁻¹ is denoted as S3 in the infrared spectroscopy chart of the imide group-containing compound of the invention.

The reason for this is because it is also possible to use the ratio of S1/S3 as an indicator indicating the degree of partial hydrolysis as well as it is possible to obtain an imide group-containing compound exhibiting further excellent solubility in a predetermined organic solvent or adhesiveness by regulating the abundance proportion of the amide group as described above.

Consequently, the ratio of S1/S3 is more preferably a value within the range of from 5 to 15 and even more preferably a value within the range of from 7 to 12.

### (5)-3 S1/S4

In addition, it is preferable that the ratio(or proportion) of S1/S4 is a value within the range of from 8 to 30 when the height of the absorption peak derived from a benzene ring at the wavenumber of 1,500 cm⁻¹ is denoted as S1 and the height of the absorption peak derived from a carboxyl group at the wavenumber of 1,413 cm⁻¹ is denoted as S4 in the infrared spectroscopy chart of the imide group-containing compound of the invention.

The reason for this is because it is also possible to use the ratio of S1/S4 as an indicator indicating the degree of partial hydrolysis as well as it is possible to obtain an imide group-containing compound exhibiting further excellent solubility in a predetermined organic solvent or adhesiveness by regulating the abundance proportion of the carboxyl group as described above.

Consequently, the ratio of S1/S4 is more preferably a value within the range of from 10 to 25 and even more preferably a value within the range of from 13 to 20.

### 4. Weight-average molecular weight

In addition, it is preferable that the weight-average molecular weight of the imide group-containing compound of the invention is a value within the range of from 1,000 to 100,000.

The reason for this is because favorable solubility of the imide group-containing compound in an organic solvent is obtained as well as predetermined low-temperature curability thereof is obtained by having a weight-average molecular weight within this range.

Consequently, the weight-average molecular weight of the imide group-containing compound is more preferably a value within the range of from 3,000 to 60,000 and even more preferably a value within the range of from 5,000 to 30,000.

Meanwhile, the weight-average molecular weight of the imide group-containing compound can be measured by using a gel permeation chromatography in terms of polystyrene.

### 5. Solvent

### (1) Kind

In addition, the kind of the solvent in the imide group-containing compound solution is not also particularly limited but is preferably at least one of water, N-methyl-2-pyrrolidone, N,N-dimethylformamide, N,N-dimethylacetamide, methyl diglyme, methyl triglyme, dioxane, tetrahydrofuran, cyclohexanone, cyclopentanone, γ-butyrolactone, toluene, ethyl acetate, butyl acetate, cellosolve, methyl ethyl ketone, anisole and the like.

Particularly, N-methyl-2-pyrrolidone and N,N-dimethylacetamide are a suitable organic solvent since the imide group-containing compound exhibits excellent solubility in these solvents and thus can be dissolved therein to a considerable solid content concentration.

Furthermore, it is also preferable that the imide group-containing compound is sufficiently dissolved using N-methyl-2-pyrrolidone or the like in advance, and a predetermined amount (for example, 1 to 30% by weight of the total amount of the organic solvent) of water, an alcohol or the like is additionally blended in that state, thereby obtaining an aqueous solution or alcohol solution of the imide group-containing compound which is uniform and exhibits high safety or the like.

### (2) Blending amount

In addition, with regard to the blending amount of the solvent in the imide group-containing compound solution, it is preferable to add the solvent so as to have a value within the range of from 1 to 40% by weight in terms of the solid content concentration of the imide group-containing compound.

The reason for this is because the effect of the viscosity stabilizer can be effectively exerted and thus favorable storage stability can be obtained by adjusting the blending amount of the solvent such that the solid content concentration of the imide group-containing compound is a value within a predetermined range.

In addition, this is because not only handling but also coating and drying of the imide group-containing compound solution are facilitated and further it is possible to uniformly and rapidly blend another blending component, for example, a thermoplastic resin component (a polyvinyl alcohol resin, a polyvinyl formal resin, a polyvinyl butyral resin, a hydroxyl group-containing polyester resin, a vinyl acetate resin, an acrylic resin or the like), a thermosetting resin component (an epoxy resin, a silicone resin, a phenol resin or the like), a photocurable resin component (an acrylic monomer, an acrylic oligomer or the like), a metal material, and a ceramic material when the solid content concentration of the imide group-containing compound is within this range.

More specifically, this is because there is a case in which the handling of the imide group-containing compound solution is difficult due to the excessively low initial viscosity thereof or coating and drying are insufficient at the time of forming the polyimide film when the blending amount of the solvent is a value of above 99% by weight and the solid content concentration of the imide group-containing compound is a value of below 1% by weight.

On the other hand, this is because there is a case in which the effect of the viscosity stabilizer may not be effectively exerted and the viscosity stability of the imide group-containing compound solution significantly deteriorates when the blending amount of the solvent is a value of below 60% by weight and the solid content concentration of the imide group-containing compound is a value of above 40% by weight.

Consequently, with regard to the blending amount of the solvent, the solvent is added such that the solid content concentration is more preferably a value within the range of from 5 to 30% by weight and even more preferably a value within the range of from 10 to 20% by weight with respect to the total amount of the imide group-containing compound solution in terms of the solid content concentration of the imide group-containing compound.

### (3) Viscosity

In addition, it is preferable that the viscosity of the imide group-containing compound solution is a value within the range of from 10 to 500,000 mPa·sec (measuring device: B-type viscometer, measurement temperature: 25°C, the same applies hereinafter).

The reason for this is because not only handling of the imide group-containing compound solution is facilitated but also the coating properties thereof are improved and further it is possible to uniformly and rapidly blend another blending component, for example, a thermoplastic resin component, a thermosetting resin component, a photocurable resin component, a metal material, and a ceramic material by limiting the viscosity of the imide group-containing compound solution within a predetermined range.

Consequently, the viscosity of the imide group-containing compound solution is more preferably a value within the range of from 1,000 to 80,000 mPa·sec and even more preferably a value within the range of from 5,000 to 30, 000 mPa·sec.

### 6. Viscosity stabilizer

### (1) Kind

The kind of the viscosity stabilizer is an orthocarboxylic ester and a chelating agent or either one of them.

In other words, it is possible to reduce the increase in viscosity of the imide group-containing compound solution during storage and thus to obtain an imide group-containing compound solution excellent in storage stability by blending such a viscosity stabilizer.

In addition, more specifically, examples of the orthocarboxylic ester may include at least one dehydrating agent such as trimethyl orthoformate, triethyl orthoformate, tripropyl orthoformate tributyl orthoformate, trimethyl orthoacetate, triethyl orthoacetate, tripropyl orthoacetate, tributyl orthoacetate, trimethyl orthopropionate, triethyl orthopropionate, tripropyl orthopropionate, tributyl orthopropionate, trimethyl orthovalerate, triethyl orthovalerate, trimethyl orthochloroacetate, triethyl orthochloroacetate, tripropyl orthochloroacetate, tributyl orthochloroacetate, trimethyl orthodichloroacetate, and triethyl orthodichloroacetate.

Particularly, trimethyl orthoformate and triethyl orthoformate are a suitable orthocarboxylic ester since these esters absorb a trace amount of moisture which leads to an increase in viscosity and thus favorable viscosity stability is exerted even blended in a relatively small amount.

In addition, the chelating agent is preferably at least one of phytic acid, tannic acid, gallic acid, and the like.

The reason for this is because such a viscosity stabilizer can capture a free metal ion or the like and thus can effectively suppress an increase in viscosity even when the blending amount of the viscosity stabilizer is relatively small.

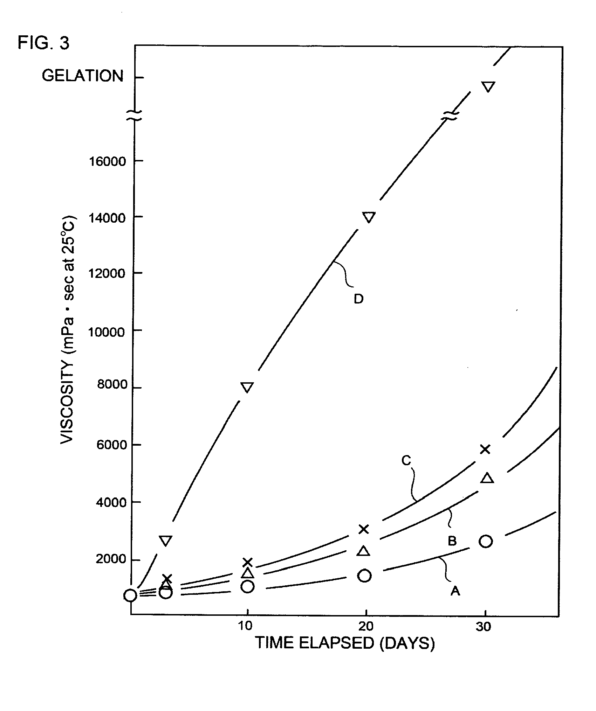

Here, the viscosity holding effect (viscosity increase inhibitory effect) with respect to the imide group-containing compound solution by various kinds of viscosity stabilizers will be described with reference to Fig. 3.

In Fig. 3, the horizontal axis represents the days (days) elapsed for the storage of the imide group-containing compound solution containing a viscosity stabilizer (2% by weight) conforming to Example 1 or the like at room temperature and the vertical axis represents the viscosity (mPa·sec) of the imide group-containing compound solution containing the viscosity stabilizer.

In addition, the characteristic curve A corresponds to the imide group-containing compound solution in which trimethyl orthoformate is blended as a viscosity stabilizer, the characteristic curve B corresponds to the imide group-containing compound solution in which triethyl orthoformate is blended as a viscosity stabilizer, and the characteristic curve C corresponds to the imide group-containing compound solution in which phytic acid is blended as a viscosity stabilizer. On the other hand, the characteristic curve D corresponds to the imide group-containing compound solution that does not contain any viscosity stabilizer.

The viscosity of the imide group-containing compound solutions is about 2, 500 mPa·sec, 4, 900 mPa·sec, and 6, 100 mPa·sec, respectively even after the elapse of 30 days although a slight increase is observed along with the elapse of days in a case in which various kinds of viscosity stabilizers are contained in a predetermined amount (2% by weight) as illustrated in these characteristic curves A to C in Fig 3.

On the other hand, the viscosity of the imide group-containing compound solution increases significantly along with the elapse of days, the imide group-containing compound solution gels after the elapse of 30 days, and thus a state in which the viscosity may not be measured is indicated as illustrated in the characteristic curves D in the case of the imide group-containing compound solution that does not contain any viscosity stabilizer.

In other words, it can be said that an increase in viscosity during storage can be effectively suppressed compared with the case in which a viscosity stabilizer is not contained at all by blending a predetermined viscosity stabilizer with the imide group-containing compound solution as can be understood from the comparison of the characteristic curves A to D in Fig. 3.

### (2) Blending amount

In addition, it is preferable that the blending amount of the viscosity stabilizer is a value within the range of from 0.1 to 20 parts by weight with respect to 100 parts by weight of the imide group-containing compound.

The reason for this is because the possibility that the reactivity or the like of the imide group-containing compound to be obtained is inhibited by the viscosity stabilizer is reduced as well as an increase in viscosity can be certainly suppressed according to the constitution in which the blending amount of the viscosity stabilizer is limited within this range.

More specifically, this is because there is a case in which the viscosity stabilizing effect significantly decreases depending on the kind or the like of the viscosity stabilizer when the blending amount of the viscosity stabilizer is a value of below 0.1 part by weight.

On the other hand, this is because there is a case in which the heat resistance or mechanical properties of the polyimide film to be obtained significantly deteriorates or the low-temperature curability deteriorates when the blending amount of the viscosity stabilizer is a value of above 20 parts by weight.

Consequently, the blending amount of the viscosity stabilizer is more preferably a value within the range of from 0.2 to 10 parts and even more preferably a value within the range of from 0.5 to 5 parts by weight with respect to 100 parts by weight of the imide group-containing compound.

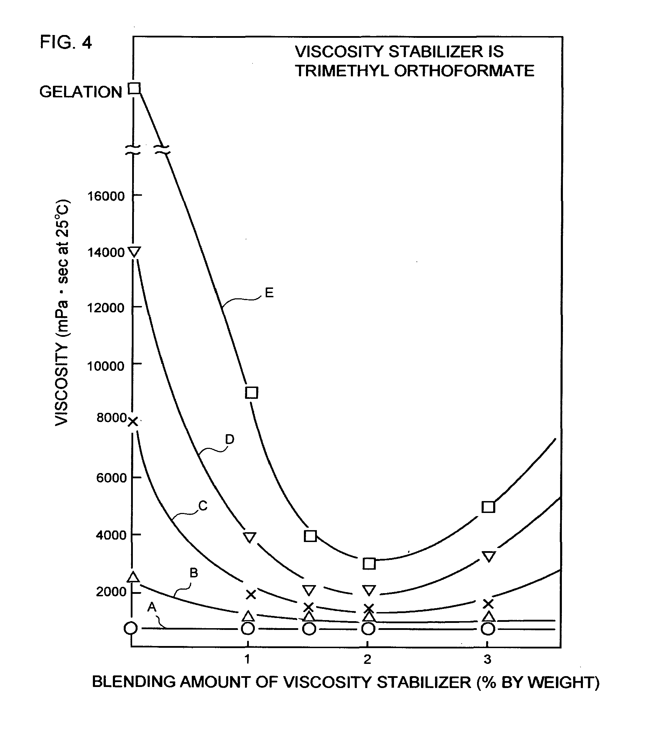

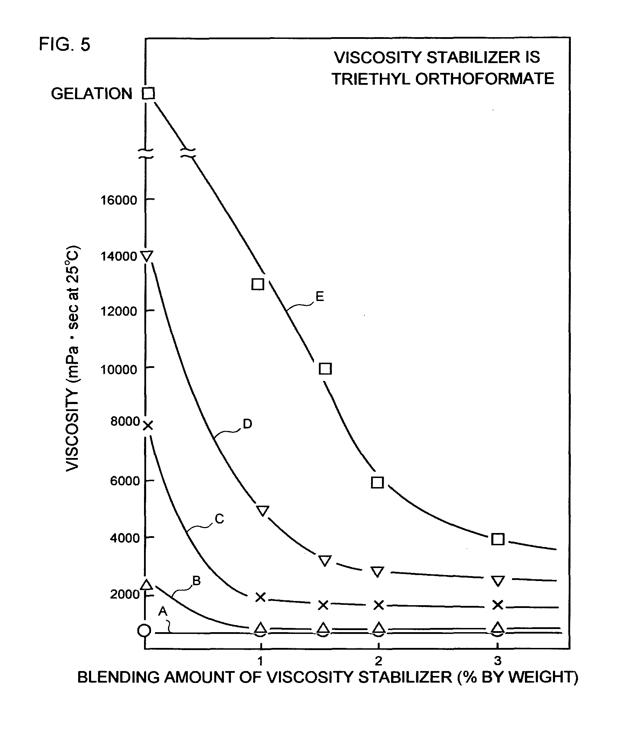

Here, the viscosity holding effect (viscosity increase inhibitory effect) with respect to the imide group-containing compound solution by the change in the blending amount of the viscosity stabilizer will be described with reference to Fig. 4 and Fig. 5.

In addition, in Fig. 4, the horizontal axis represents the blending amount (% by weight) of the viscosity stabilizer (trimethyl orthoformate) in the imide group-containing compound solution conforming to Example 1 or the like and the vertical axis represents the viscosity (mPa·sec) of the imide group-containing compound solution containing the viscosity stabilizer.

Moreover, the characteristic curve A corresponds to the imide group-containing compound solution having a number of days elapsed of 0 day, that is, in the initial state. Moreover, the characteristic curve B corresponds to the imide group-containing compound solution after the elapse of 3 days, the characteristic curve C corresponds to the imide group-containing compound solution after the elapse of 10 days, the characteristic curve D corresponds to the imide group-containing compound solution after the elapse of 20 days, and the characteristic curve E corresponds to the imide group-containing compound solution after the elapse of 30 days.

The viscosity of the imide group-containing compound solution is about 2,500 mPa·sec even after the elapse of 30 days, for example, when the blending amount of the viscosity stabilizer is 2% by weight with respect to the total amount although a difference in the increase in viscosity is observed depending on the difference in the blending amount (1% by weight, 1.5% by weight, 2% by weight, and 3% by weight) of the viscosity stabilizer (trimethyl orthoformate) as illustrated in these characteristic curves A to E in Fig 4.

On the other hand, the viscosity of the imide group-containing compound solution increases significantly along with the elapse of days, the imide group-containing compound solution gels after the elapse of 30 days, and thus a state in which the viscosity may not be measured is indicated in a case in which the viscosity stabilizer is not contained at all (0% by weight).

In other words, it can be said that an increase in viscosity during storage can be effectively suppressed compared with a case in which the viscosity stabilizer is not contained at all by blending a predetermined amount of viscosity stabilizer with the imide group-containing compound solution as can be understood from the comparison of the characteristic curves A to E in Fig. 4.

Furthermore, Fig. 5 is an example in which triethyl orthoformate is used as a kind of the viscosity stabilizer, the matters other than the kind are the same as those illustrated in Fig. 4.

In other words, the viscosity of the imide group-containing compound solution is about 6,100 mPa·sec even after the elapse of 30 days, for example, when the blending amount of the viscosity stabilizer is 2% by weight although a difference in the increase in viscosity is observed depending on the blending amount (1% by weight, 1.5% by weight, 2% by weight, and 3% by weight) of the viscosity stabilizer (triethyl orthoformate) as illustrated in these characteristic curves A to E in Fig 5, and thus it can be understood that an increase in viscosity during storage can be effectively suppressed compared with a case in which the viscosity stabilizer is not contained at all (0% by weight).

### (3) Amine compound

In addition, it is also preferable that a predetermined amount of an amine compound is blended with the imide group-containing compound solution in order to further improve the viscosity stability.

It has been demonstrated that the increase in viscosity during storage is significant particularly in a case in which the imide group-containing compound solution is an aqueous solution, and thus it is possible to remarkably suppress the increase in viscosity of the aqueous solution of imide group-containing compound during storage at room temperature by blending an amine compound, for example, at least one tertiary amine compound such as trimethylamine, triethylamine, trimethanolamine, or triethanolamine and the viscosity stabilizer described above together with the aqueous solution of imide group-containing compound.

In addition, it is preferable that the blending amount of the amine compound is a value within the range of from 0.1 to 20 parts by weight with respect to 100 parts by weight of the imide group-containing compound in the case of blending an amine compound.

The reason for this is because the possibility that the reactivity or the like of an imide group-containing compound to be obtained is inhibited is reduced as well as an increase in viscosity of the aqueous solution of imide group-containing compound can be certainly suppressed according to the constitution in which the blending amount of the amine compound is limited within this range.

More specifically, this is because there is a case in which the viscosity stabilizing effect by the amine compound significantly decreases depending on the kind or the like thereof when the blending amount thereof is a value of below 0.1 part by weight.

On the other hand, this is because there is a case in which the heat resistance or mechanical properties of the polyimide film to be obtained significantly deteriorates or the low-temperature curability deteriorates when the blending amount of the amine compound is a value of above 20 parts by weight.

Consequently, the blending amount of the amine compound is more preferably a value within the range of from 0.5 to 10 parts and even more preferably a value within the range of from 1 to 5 parts by weight with respect to 100 parts by weight of the imide group-containing compound.

### 7. Surfactant

### (1) Kind

In addition, it is preferable that a predetermined surfactant is blended with the imide group-containing compound solution in order to improve the stability of the solution, the dispersibility of the imide group-containing compound, and the wettability of the solution to the substrate to be coated, and further, in order to adjust the surface smoothness of the coating film obtained.

The kind of such a surfactant may include an anionic surfactant, a cationic surfactant, and a nonionic surfactant, and specific examples thereof may include one kind alone or a combination of two or more kinds of an ammonium salt-based surfactant, an amine salt-based surfactant, a fluorine-based surfactant, a siloxane-based surfactant, and a polymeric surfactant.

### (2) Blending amount

In addition, it is preferable that the blending amount of the surfactant is a value within the range of from 0.01 to 10% by weight with respect to the total amount of the imide group-containing compound solution in the case of blending a surfactant with the imide group-containing compound solution.

The reason for this is because the addition effect is not exerted in some cases when the blending amount of the surfactant is a value of below 0.01% by weight and the heat resistance or mechanical strength of the polyimide resin to be obtained decreases in some cases when the blending amount of the surfactant is a value of above 10% by weight.

Consequently, the blending amount of the surfactant is more preferably a value within the range of from 0.1 to 5% by weight and even more preferably a value within the range of from 0.5 to 1% by weight with respect to the total amount of the imide group-containing compound solution although it also depends on the kind thereof.

### 8. Colorant

In addition, it is also preferable that a colorant such as a dye or a pigment is blended according to the use or shape of the polyimide resin to be obtained.

Particularly, the imide group-containing compound is curable at a low temperature of 150°C or lower and more preferably 130°C or lower and thus the thermal decomposition of the various kinds of pigments or dyes blended as an additive does not occur, and as a result, it is possible to obtain a colored polyimide film which has been impossible in the related art.

### 9. Low-temperature curability

In addition, with regard to the low-temperature curability of the imide group-containing compound, it is preferable that a predetermined polyimide (for example, imidization rate of 70% or more) is obtained by thermally curing the imide group-containing compound at a temperature of 200°C or lower, more preferably a temperature of 150°C or lower, and even more preferably under a temperature condition of 120°C or lower.

Consequently, it is preferable that a polyimide (the imidization ratio is preferably 70% or more, more preferably 80% or more, and even more preferably 95% or more) represented by the infrared spectroscopy chart illustrated in Fig. 2 is obtained, for example, in a case in which the imide group-containing compound (compound A) represented by the infrared spectroscopy chart illustrated in Fig. 1 is normally treated under the heating conditions of from 100 to 200°C and 30 minutes.

More specifically, it is possible to stably form a predetermined polyimide film even with respect to the substrate composed of an olefin resin such as polypropylene when the imide group-containing compound is thermally cured under the heating conditions of from 100 to 150°C and 30 minutes.

In addition, it is possible to form a predetermined polyimide film with respect to a metal substrate or a ceramic substrate as a matter of course, and it is also possible to stably form a predetermined polyimide film even with respect to a resin substrate composed of a polyester resin or the like when the imide group-containing compound is thermally cured under the heating conditions of from 150 to 200°C and 30 minutes.

### 10. Production method

In addition, upon producing the imide group-containing compound of the invention, the production method is not particularly limited but is preferably, for example, a production method including the partial hydrolysis of a polyimide molded article, namely a method for producing a imide group-containing compound including the following processes (1) to (3).
(1) A preparation process of cutting a polyimide molded article into a predetermined size
(2) A process of hydrolyzing the polyimide molded article having a predetermined size in the presence of water and a basic compound under a temperature condition of from 50 to 100°C to obtain a crude imide group-containing compound
(3) A process of purifying the crude imide group-containing compound to obtain an imide group-containing compound having an absorption peak derived from an imide group at a wavenumber of 1,375 cm⁻¹, an absorption peak derived from an amide group at a wavenumber of 1,600 cm⁻¹, and an absorption peak derived from a carboxyl group at a wavenumber of 1,413 cm⁻¹ in the infrared spectroscopy chart obtained by the infrared spectroscopic measurement.

### (1) Process (1)

The process (1) is a preparation process of cutting a polyimide molded article into a predetermined size.

Hence, it is preferable that the maximum width or the average particle size of the polyimide molded article is adjusted in advance by cutting or classifying the polyimide molded article as the industrial waste using a cutting device, a grinding device, or a classifying device.

In other words, it is preferable that the maximum width or the average particle size of the polyimide molded article is adjusted in advance by cutting or classifying the polyimide molded article as the industrial waste using a cutter, a knife, a chopper, a shredder, a ball mill, a grinding device, a sieve, a perforated metal, or a cyclone so that the partial hydrolysis thereof can be performed more uniformly and rapidly.

More specifically, the average width of the polyimide molded article is preferably 10 mm or less and more preferably a value within the range of from 1 to 5 mm in the case of adjusting to a strip shape.

In addition, the average width of the polyimide molded article is preferably 10 mm or less, more preferably a value within the range of from 1 to 5 mm and even more preferably a value within the range of from 2 to 45 mm in the case of adjusting to a granular shape.

Furthermore, it is preferable that the polyimide molded article is introduced into a grinder for resin equipped with a perforated metal, a sieve or the like and crushed while cooling with dry ice or the like to obtain a polyimide crushed product having a small piece or granular shape in order to have a further even maximum width or average particle size.

### (2) Process (2)

Next, the process (2) is a process of partially hydrolyzing the polyimide molded article having a predetermined size in the presence of at least water and a basic compound under a temperature condition of from 40 to 100°C and more preferably from 50 to 80°C to obtain a crude imide group-containing compound.

Hence, it is preferable that the polyimide molded article is hydrolyzed in the presence of at least water and a basic compound at a predetermined temperature, for example, at a normal pressure, and under a condition of from 1 to 48 hours.

Here, the basic compound means a compound which generates a hydroxide ion, and examples thereof may include a hydroxide, a carbonate, a hydrogen carbonate, and a fatty acid salt of an alkali metal or an alkaline earth metal such as sodium hydroxide, potassium hydroxide, calcium hydroxide, sodium hydrogencarbonate, potassium hydrogencarbonate, sodium acetate, potassium acetate, and sodium propionate or ammonia, ammonium carbonate, ammonium hydrogen carbonate, ammonium acetate, hydroxylamine, hydrazine, tetramethylammonium hydroxide, tetraethylammonium hydroxide, and an organic amine compound.

Particularly, sodium hydroxide or potassium hydroxide is preferably used since the hydrolysis proceeds at a relatively low temperature and in a mild manner.

Meanwhile, as described above, it is possible to confirm whether the polyimide molded article is partially hydrolyzed and thus the desired crude imide group-containing compound is obtained or not by confirming the presence or absence of the absorption peak derived from an imide group, the absorption peak derived from an amide group, the absorption peak derived from a carboxyl group or the like in the infrared spectroscopy chart obtained by the infrared spectroscopic measurement, the height of each of the peaks, and further the fact that the relative height ratio thereof or the like to the absorption peak derived from a benzene ring is a numeral value within a predetermined range.

### (3) Process (3)

Next, the process (3) is a process of purifying the crude imide group-containing compound to obtain an imide group-containing compound having an absorption peak derived from an imide group at a wavenumber of 1,375 cm⁻¹, an absorption peak derived from an amide group at a wavenumber of 1,600 cm⁻¹, and an absorption peak derived from a carboxyl group at a wavenumber of 1,413 cm⁻¹ in the infrared spectroscopy chart obtained by the infrared spectroscopic measurement.

Hence, it is preferable to prepare an imide group-containing compound from which impurities are removed, for example, by repeatedly performing a series of processes of an acid treatment (a hydrochloric acid, nitric acid, or sulfuric acid treatment, or the like), water washing, an alkali treatment (a sodium hydroxide, potassium hydroxide, sodium carbonate, or potassium carbonate treatment, or the like), and water washing from 1 to 10 times to purify the crude imide group-containing compound.

Meanwhile, it is possible to confirm whether the crude imide group-containing compound is sufficiently purified or the like by the fact that the content of the element (or an ion of element) such as chlorine, sulfur, phosphorus, aluminum, or magnesium in the purified crude imide group-containing compound is equal to or less than a predetermined amount confirmed by the quantification of the element using the ion chromatography or the X-ray photoelectron spectroscopy (XPS).

More specifically, the purification extent of the crude imide group-containing compound can be confirmed, for example, by the fact that the quantity of the chloride ion is 100 ppm or less, more preferably 10 ppm or less, and even more preferably 1 ppm or less confirmed by the quantification of the chloride ion using the ion chromatography for elemental analysis.

### 11. Use

The use of the imide group-containing compound of the invention is not particularly limited, and the imide group-containing compound can be thermally cured at a predetermined temperature so as to use as a polyimide film exhibiting favorable heat resistance, a polyimide coating, a polyimide-based electrical insulating material and the like and further as various kinds of heat-resistant polyimide molded article such as a heat-resistant electrical part enclosure, a heat-resistant material for electronic part, a heat-resistant circuit board, a heat-resistant container, a heat-resistant machine part, and a heat-resistant automobile part.

### [Second embodiment]

The second embodiment is a method for producing a polyimide film derived from an imide group-containing compound solution containing an imide group-containing compound obtained by partially hydrolyzing a polyimide molded article and an organic solvent. In the method for producing a polyimide film, the imide group-containing compound has an absorption peak derived from an imide group at a wavenumber of 1,375 cm⁻¹, an absorption peak derived from an amide group at a wavenumber of 1,600 cm⁻¹, and an absorption peak derived from a carboxyl group at a wavenumber of 1,413 cm⁻¹ in an infrared spectroscopy chart obtained by an infrared spectroscopic measurement thereof, and the method for producing a polyimide film includes the following processes (1) and (2):
process (1); a process of forming a coated material by coating the imide group-containing compound solution according to any one of claims 1 to 7 on a substrate; and
process (2); a process of forming a polyimide film by heat-treating the coated material thus formed.

### 1. Imide group-containing compound solution

With regard to the imide group-containing compound solution, the matters are the same as those described in the first embodiment, and thus a repeated description will be omitted here.

Meanwhile, it is possible to blend various kinds of additives within a range in which the properties of the imide group-containing compound solution are not impaired.

In other words, it is preferable to blend at least one kind of a fluorocarbon resin, an epoxy resin, a phenolic resin, a silicone resin, a urethane resin, an olefin resin (including an acrylic resin), a polyester resin, a polyamide resin, a carbon resin and the like.

In addition, it is also preferable to blend at least one kind of an electrically conductive material, an electrically insulating material, a ultraviolet absorber, a radiation-absorbing agent, a crosslinking agent, a viscosity modifier, a matting agent, a weight saving material, a fiber and the like according to the use or shape of the polyimide resin to be obtained by thermal curing.

### 2. Process 1

It is a process of forming a coated material by coating the imide group-containing compound solution on a substrate.

Here, the coating method of the imide group-containing compound solution is not particularly limited, and it is possible to adopt a coating method known in the related art.

Consequently, various kinds of coating methods such as a spraying method, a bar coating method, a gravure coating method, a roll coating method, an offset printing method, an inkjet method, a screen printing method, and a die coating method are appropriately selected as the coating method according to the purpose of coating or the desired thickness of coating film.

Meanwhile, the viscosity of the imide group-containing compound solution can be appropriately selected, for example, within a suitable range (10 to 500,000 mPa·sec at 25°C) according to the various kinds coating methods described above or the like.

In addition, the substrate is not particularly limited, and examples thereof may include one kind alone or a combination of two or more kinds of various kinds of resin films, various kinds of resin substrates, a film-shaped glass, a glass substrate, a film-shaped ceramic, a ceramic substrate, paper and the like.

Particularly, examples of the various kinds of resin films may include a polyester film (PET, PNT, PCT, PCTA, and PCTG), a polycarbonate film (PC), a polyolefin film (PE and PP), a trimethylpentane (TMP), a fluorine film (PTFE and PFVD), a polyurethane film (PU), a polyamide film (PA), a polysulfone film (PSU), a polyphenylene sulfide film (PPS), a polyether ether ketone film (PEEK), and a silicone film (Si).

In addition, examples of the various kinds of resin substrates may include at least one of an epoxy resin substrate, a phenol resin substrate, an acrylic resin substrate, a polycarbonate resin substrate, a silicone resin substrate, a polyolefin resin substrate, a polyacetal resin substrate, an ABS resin substrate, a PEEK resin substrate and the like.

In addition, it is preferable that the surface of the various kinds of substrates is subjected to a surface treatment.

It is possible to efficiently obtain a polyimide film further excellent in adhesiveness to various kinds of substrates by implementing the method for producing a polyimide film as described above.

Here, it is preferable that the various kinds of substrates are subjected to at least one surface treatment, for example, a primer treatment, a surface roughening treatment, a flame treatment, a corona treatment, a ultraviolet treatment, a flame treatment by silicate (the ITRO treatment provided by ITRO co., Ltd. is one example), a coupling agent treatment, an acid treatment, an alkali treatment, a zinc treatment, and a water washing treatment as the surface treatment.

In addition, it is preferable that the various kinds of substrates have a metal layer (including metal wiring) formed thereon.

The reason for this is because it is possible to efficiently obtain a polyimide film further equipped with a metal layer therein as a circuit board exhibiting a shielding effect or a finished product or intermediate product such as a multilayer board having an internal circuit by implementing the method for producing a polyimide film as described above.

### 3. Process 2

The process 2 is a process of forming a polyimide film by heat-treating the coated material which is composed of the imide group-containing compound and formed in the process 1 so as to allow the imide group-containing compound to react as well as to remove the solvent.

In other words, it is possible to obtain a film-shape polyimide film which has an imidization rate of 70% or more and is excellent in heat resistance or mechanical properties by performing the heat treatment of the coated material under the condition of a heating temperature of from 100 to 300°C and a heating time of from 10 to 180 minutes.

Consequently, the heat treatment condition of a heating temperature of from 130 to 250°C and a heating time of from 20 to 120 minutes is more preferable and the heat treatment condition of a heating temperature of from 150 to 200°C and a heating time of from 30 to 60 minutes is even more preferable.

Meanwhile, as a measure of the heat treatment, it is preferable that a polyimide (imidization rate of 70% or more) represented by the infrared spectroscopy chart illustrated in Fig. 2 is obtained, for example, in a case in which the imide group-containing compound (compound A) represented by the infrared spectroscopy chart illustrated in Fig. 1 is normally treated under the heating condition of from 100 to 200°C and 30 minutes.

### 4. Process 3

It is preferable to form a circuit pattern on the polyimide film thus obtained in order to produce a flexible circuit board by providing a process 3 after the process 2.

In other words, this is because it is possible to obtain a flexible circuit board which is excellent in heat resistance or electrical properties and moreover is inexpensive by forming a metal layer on the polyimide film thus obtained and then forming a circuit pattern by a lithography method.

Consequently, it is possible to efficiently and economically obtain a circuit board exhibiting a shielding effect, a multilayer board consisting of a plurality of flexible circuit boards layered, or the like using such a flexible circuit board.

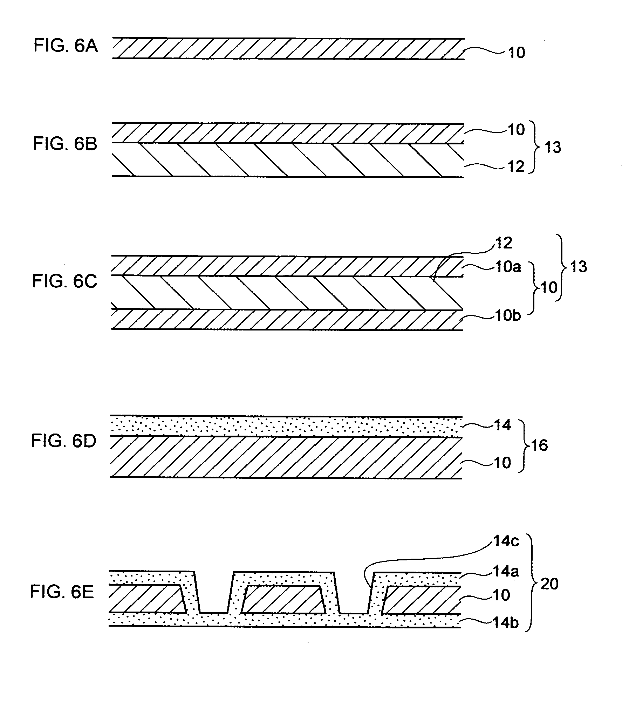

Here, the aspects of the use of the polyimide film thus obtained will be described more specifically with reference to Fig. 6A to 6E.

First, a representative use of the imide group-containing compound is a single layer polyimide film 10 used in order to improve heat resistance or electrical insulating properties as illustrated in Fig. 6A, and the film can be obtained by thermally curing the imide group-containing compound of the invention under a predetermined condition.

In addition, an aspect is also preferable that a composite resin film 13 is formed by layering the polyimide film 10 in order to improve the heat resistance or electrical insulating properties of another resin film 12 as illustrated in Fig. 6B. In other words, an aspect is also preferable that a composite resin film 13 which is obtained by forming the predetermined polyimide film 10 is derived from the imide group-containing compound of the invention on the surface of another resin film 12 such as a polyester film or a polyolefin film and exhibits heat resistance or the like.

In addition, as illustrated in Fig. 6C, an aspect is also preferable that a composite resin film 13' is formed by layering the polyimide film 10 (10a and 10b) on both sides of another resin film 12 which is a modification of the composite resin film 13 illustrated in Fig. 6B.

In addition, as illustrated in Fig. 6D, an aspect is also preferable that a metal composite polyimide film 16 is obtained by forming a metal layer 14 on one side of the polyimide film 10. It is possible to omit the adhesive layer between the polyimide film 10 and the metal layer 14 in the case of such a metal composite polyimide film 16 and thus the metal composite polyimide film 16 can be formed into a thin film.

Furthermore, as illustrated in Fig. 6E, it is also preferable to fabricate a double-sided circuit board 20 by forming a first metal layer 14a and a second metal layer 14b on both sides of the polyimide film 10 and also forming a via hole 14c which electrically connects the first metal layer 14a and the second metal layer 14b.

### Examples

Hereinafter, the invention will be described in more detail based on Examples.

### [Example 1]

### 1. Production of imide group-containing compound solution

### (1) Process 1

The Kapton film (a mixed product with other Kapton films although Kapton-100H is the main constituent manufactured by DU PONT-TORAY CO., LTD.) as the polyimide molded article was cut into strips having a width of 10 mm or less using a chopper.

Next, the cut polyimide molded article was introduced into a grinder for resin (Model P-1314 manufactured by Horai Co., Ltd.) equipped with a perforated metal having a diameter of 3 mm and the cut polyimide molded article (average particle size: about 3 µm) passing through the perforated metal was crushed while cooling with dry ice added so as to obtain a polyimide crushed product as the target of the partial hydrolysis.

### (2) Process 2

Next, into a 1,000 ml vessel equipped with a stirrer, 5 g of the polyimide crushed product thus obtained, 400 g of ion exchanged water, and 2 g of potassium hydroxide as a basic substance were introduced.

Subsequently, the inner temperature of the vessel was raised to 50°C and then the hydrolysis treatment of the polyimide crushed product was performed under a condition of 24 hours while stirring the introduced materials, thereby obtaining a solution containing a crude imide group-containing compound.

### (3) Process 3

Next, an acid treatment, water washing, an alkali treatment, and water washing of the solution containing the crude imide group-containing compound was repeatedly performed five times in order to purify the crude imide group-containing compound, thereby obtaining a granular imide group-containing compound (average particle size: 30 µm).

Incidentally, the hydrolysis condition and average particle size of the imide group-containing compound are presented in Table 1.

Meanwhile, it was confirmed by the quantitative analysis that about 0.2% by weight of potassium, about 0.02% by weight of Si, about 0.02% by weight of Ca, and 0.005% by weight of Fe were contained in the granular imide group-containing compound, respectively.

### (4) Process 4

Next, into a vessel equipped with a stirrer, 30 g of granular imide group-containing compound and 67 g of N-methyl-2-pyrrolidone were introduced, thereby preparing a uniform imide group-containing compound solution.

Subsequently, 100 g of an imide group-containing compound solution (solid content concentration of 30% by weight) was prepared by blending 2 g (2% by weight) of triethyl orthoformate as a viscosity stabilizer with respect to 97 g of the imide group-containing compound solution thus obtained.

### 2. Evaluation of imide group-containing compound

### (1) FT-IR analysis (evaluation 1)

The granular imide group-containing compound thus obtained was dissolved in N-methyl-2-pyrrolidone (NMP) so as to have a solid content concentration of 15% by weight, and then an imide group-containing compound film having a thickness of 10 µm was prepared. The presence of various kinds of functional groups (an imide group, an amide group, a carboxyl group, a carbonyl group, a benzene ring, and the like) in the film thus prepared was confirmed by the ATR method using an infrared spectrophotometer (FT-IR) and also the imidization rate thereof was calculated.

More specifically, it was confirmed that the imidization rate (= (S2/S1)/(S2'/S1') x 100) was 38% by measuring the proportion of the peak ratio (S2/S1) corresponding to the imide group and the benzene ring in the imide group-containing compound of the partial hydrolysis when the ratio (S2'/S1') of the peak height (S2') of the infrared spectroscopy chart derived from the imide group at the wavenumber of 1,375 cm⁻¹ to the peak height (S1') of the infrared spectroscopy chart derived from the benzene ring at the wavenumber of 1,500 cm⁻¹ in the polyimide after curing was 100.

The FT-IR result and the average particle size of the imide group-containing compound are presented in Table 1.

Meanwhile, the infrared spectroscopy chart (imidization rate: 38%) of the imide group-containing compound thus obtained is illustrated in Fig. 1, and the infrared spectroscopy chart (imidization rate: 100%) of the cured material (the thermal curing condition of 150°C and 30 minutes) of the imide group-containing compound (compound A), namely, the polyimide of the cured material is illustrated in Fig. 2.

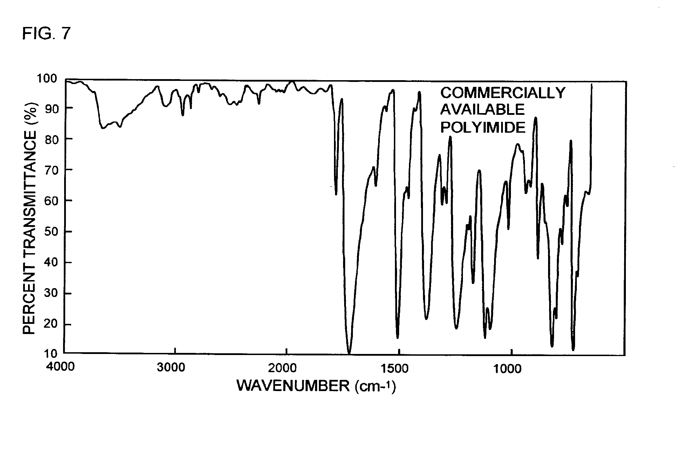

Furthermore, the infrared spectroscopy chart of a commercially available polyimide (Kapton H) is illustrated in Fig. 7 for reference.

### (2) Solubility (evaluation 2)

As described in the process (4) above, 100 g of an imide group-containing compound solution (30% by weight) containing triethyl orthoformate as a viscosity stabilizer was prepared.

Subsequently, the solubility of the imide group-containing compound was evaluated by the preparation state of the imide group-containing compound solution in accordance with the following criteria. The evaluation result thus obtained is presented in Table 2.
Very Good: It is dissolvable within 30 minutes.
Good: It is dissolvable within 60 minutes.
Fair: It is dissolvable within 120 minutes.
Bad: It is undissolvable even after 120 minutes.

### (3) Storage stability (evaluation 3)

The viscosity of the imide group-containing compound solution was measured immediately after the preparation (initial) and after the elapse of 10 days.

Subsequently, the storage stability of the imide group-containing compound solution was evaluated by the viscosity of the imide group-containing compound solution in accordance with the following criteria. The evaluation result thus obtained is presented in Table 2.
Very Good: The value in 20 days is within 3 times the initial value.
Good: The value in 20 days is within 5 times the initial value.
Fair: The value in 20 days is within 10 times the initial value.
Bad: The value in 20 days exceeds 10 times the initial value or it is unmeasurable.

### (4) Low-temperature curability (evaluation 4)

The imide group-containing compound solution was coated on a mild steel iron plate (length of 80 mm, width of 30 mm, and thickness of 1 mm), and cured by heating under the condition of 120°C and 30 minutes and the condition of 150°C and 30 minutes, respectively, so as to form a polyimide film having a thickness of 20 µm. The low-temperature curability thereof was evaluated in accordance with the following criteria. The evaluation result thus obtained is presented in Table 2.
Very Good: A firm polyimide film is formable at 120°C and 150°C, respectively.
Good: The polyimide film formed at 120°C is slightly soft but a firm polyimide film is formable at 150°C.
Fair: The polyimide film formed at 120°C is slightly soft but an almost firm polyimide film is formable at 150°C.
Bad: A firm polyimide film is unformable at both 120°C and 150°C since curing is insufficient.

### (5) Adhesiveness (evaluation 5)

The crosscut adhesion test of the polyimide film (a product cured at 150°C for 30 minutes) obtained in the evaluation on the low-temperature curability was performed in accordance with JIS K-5400, and the adhesiveness was evaluated in accordance with the following criteria. The evaluation result thus obtained is presented in Table 2. Very Good: It is a crosscut having a number of peeling of 0/100.
Good: It is a crosscut having a number of peeling of from 1 to 5/100.
Fair: It is a crosscut having a number of peeling of from 6 to 10/100.
Bad: It is a crosscut having a number of peeling of 11/100 or more.

### (6) Heat resistance (evaluation 6)

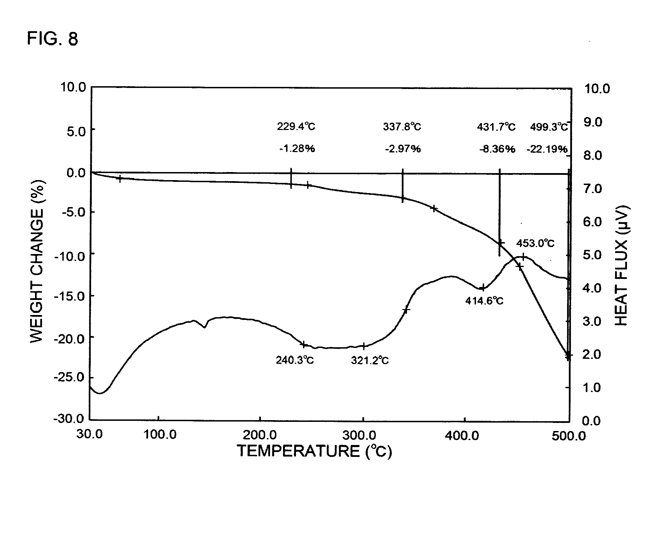

The differential thermal balance chart (TG-DTA curve) of the polyimide film (a product cured at 150°C for 30 minutes) obtained in the evaluation on the low-temperature curability was obtained as the heat resistance by heating (temperature rising rate of 10°C/min) from 30 to 500°C in nitrogen using a differential thermal balance (TG-DTA) as illustrated in Fig. 8. Thereafter, the evaluation on the heat resistance of the polyimide film was performed according to the following criteria based on the TG curve of the TG-DTA curve. The evaluation result thus obtained is presented in Table 2.
Very Good: 10% weight loss temperature is 450°C or higher.
Good: 10% weight loss temperature is 400°C or higher.
Fair: 10% weight loss temperature is 350°C or higher.
Bad: 10% weight loss temperature is below 350°C.

### (7) Flame retardance (evaluation 7)

The evaluation on the flame retardance of the polyimide film (a product cured at 150°C for 30 minutes) obtained in the evaluation on the low-temperature curability was performed in accordance with UL Standard 94 and evaluated according to the following criteria. The evaluation result thus obtained is presented in Table 2.
Very Good: The V-0 condition is satisfied.
Good: The V-1 condition is satisfied.
Fair: The V-2 condition is satisfied.
Bad: The V-2 condition is not satisfied.

### [Example 2]

In Example 2, the solubility and the like of the imide group-containing compound were evaluated in the same manner as in Example 1 except that the imide group-containing compound (compound B) was obtained by changing the hydrolysis time to 36 hours as well as the kind of the Kapton film to Kapton H (manufactured by DU PONT-TORAY CO., LTD.) as the polyimide molded article and thus by changing the degree of hydrolysis of the polyimide molded article. The evaluation results thus obtained are presented in Table 2.

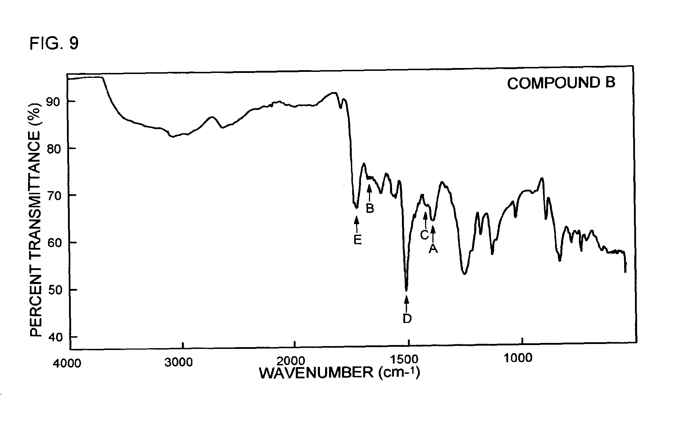

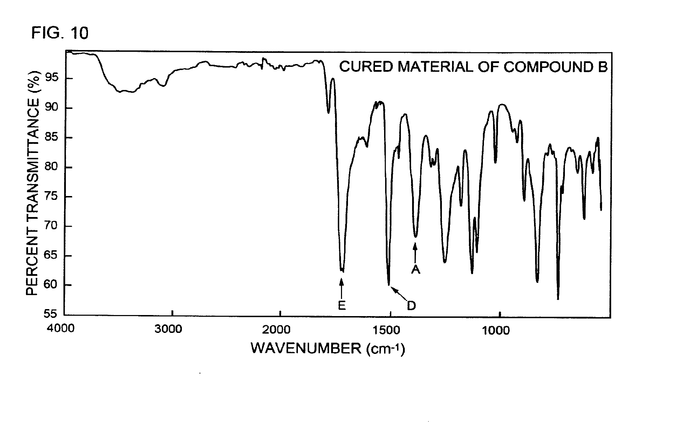

Meanwhile, the infrared spectroscopy chart (imidization rate: 32%) of the imide group-containing compound thus obtained (compound B) is illustrated in Fig. 9 and the infrared spectroscopy chart (imidization rate: 100%) of the cured material (thermal curing condition of 150°C and 30 minutes) of the imide group-containing compound (compound B), namely, the polyimide is illustrated in Fig. 10.

### [Example 3]

In Example 3, the solubility and the like of the imide group-containing compound were evaluated in the same manner as in Example 1 except that the imide group-containing compound (compound C) was obtained by shortening the hydrolysis time to 12 hours as well as changing the kind of the Kapton film to Kapton EN (manufactured by DU PONT-TORAY CO., LTD.) as the polyimide molded article and thus by changing the degree of hydrolysis of the polyimide molded article. The evaluation results thus obtained are presented in Table 2.

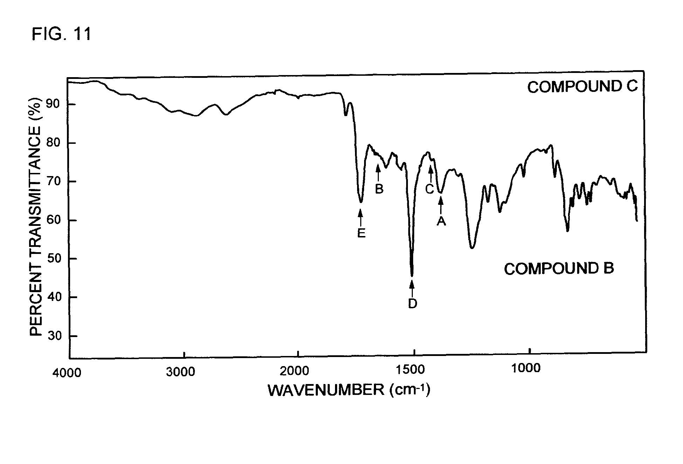

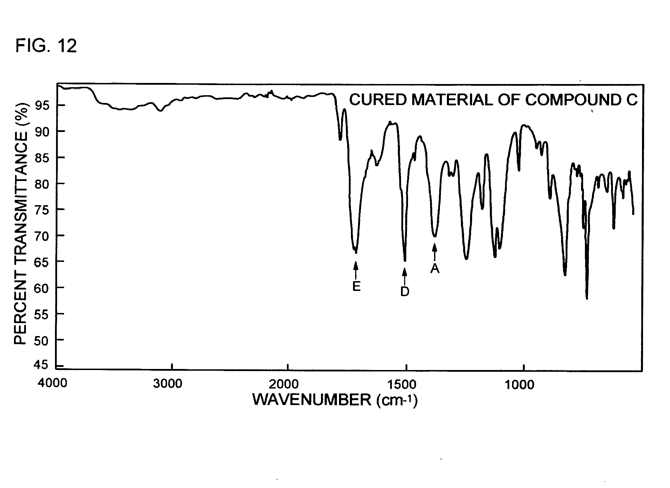

Meanwhile, the infrared spectroscopy chart (imidization rate: 43%) of the imide group-containing compound thus obtained (compound C) is illustrated in Fig. 11 and the infrared spectroscopy chart (imidization rate: 100%) of the cured material (thermal curing condition of 150°C and 30 minutes) of the imide group-containing compound (compound C), namely, the polyimide is illustrated in Fig. 12.

### [Examples 4 to 6]

In Examples 4 to 6, the imide group-containing compound solutions were prepared in the same manner as in Example 1 except that the blending amount of triethyl orthoformate as a viscosity stabilizer in the imide group-containing compound solution was 1% by weight, 1.5% by weight, and 3% by weight, respectively, and the storage stability and the like thereof were evaluated in the same manner as in Example 1. The evaluation results thus obtained are presented in Table 2.

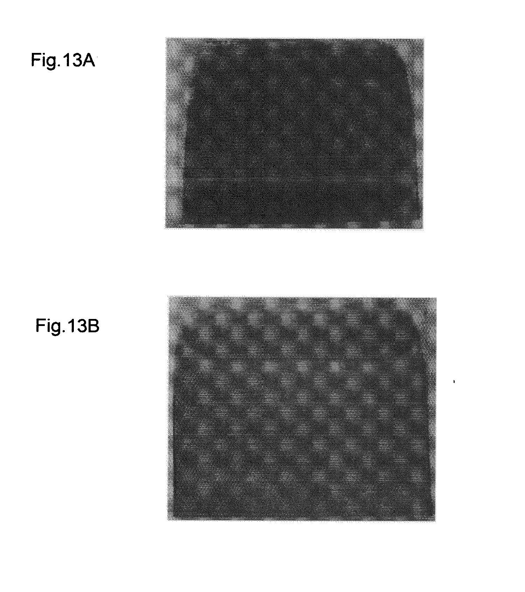

Meanwhile, the state of the polyimide film (20 µm) which is formed by coating the imide group-containing compound solution of Example 4 on a polyester film having a thickness of 50 µm using a bar coater and then heating and drying under the condition of 140°C and 20 minutes and thus derived from the imide group-containing compound solution of Example 4 is illustrated in Fig. 13B. In addition, the state of the polyimide film (20 µm) which is formed in the same manner as above and derived from the imide group-containing compound solution of Example 1 described above is illustrated as a photograph in Fig. 13A.

As illustrated in Figs. 13A and 13B, it was obtained a light yellow transparent polyimide film having a uniform thickness (20 µm) as well as excellent in coating properties and adhesiveness with respect to the polyester film regardless of the blending amount of triethyl orthoformate.

### [Comparative Example 1]

In Comparative Example 1, the imide group-containing compound solution was prepared in the same manner as in Example 1 except that sodium hydroxide was added to the polyimide molded article in a molar amount of about 80 times the theoretical decomposition amount (about 66 g) and then the hydrolysis was performed under the condition of 80°C, a normal pressure, and 7 days, and further, the resultant was neutralized with an acidic substance so as to completely decompose to pyromellitic acid and an aromatic amine (imidization rate: 0%), and the storage stability and the like thereof were evaluated in the same manner as in Example 1. The evaluation results thus obtained are presented in Table 2.

### [Comparative Example 2]

In Comparative Example 2, the imide group-containing compound solution was prepared in the same manner as in Example 1 except that sodium hydroxide was added to the polyimide molded article in a molar amount of 1 time the theoretical decomposition amount (about 0.1 g) and then the hydrolysis was performed under the condition of 30°C, a normal pressure, and 8 hours, and further, the resultant was neutralized with an acidic substance and also purified so as to obtain a compound (compound D) that is almost not partially hydrolyzed, and the storage stability and the like thereof were evaluated in the same manner as in Example 1. The evaluation results thus obtained are presented in Table 2.

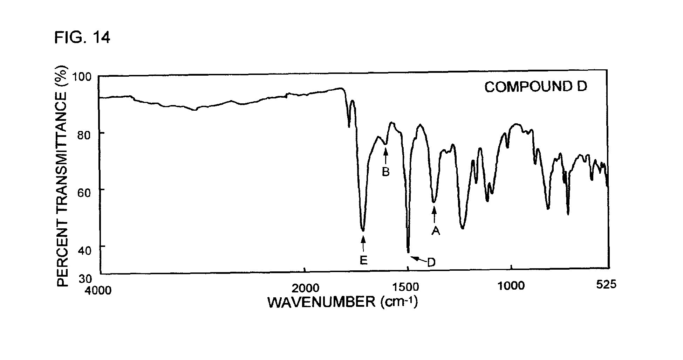

Meanwhile, the infrared spectroscopy chart of the imide group-containing compound thus obtained (imidization rate: 70%) is illustrated in Fig. 14.

### [Comparative Example 3]

In Comparative Example 3, the imide group-containing compound solution was prepared in the same manner as in Example 1 except that the viscosity stabilizer blended with the imide group-containing compound in Example 1 was not blended at all, and the storage stability and the like thereof were evaluated in the same manner as in Example 1. The evaluation results thus obtained are presented in Table 2.

**[Table 1]**

| | Water (g) | Basic compound (g) | Temperature for hydrolysis (°C) | Time for hydrolysis (hours) | Average particle size (µm) |
|---|---|---|---|---|---|
| Example 1 | 400 | 2 | 50 | 24 | 30 |
| Example 2 | 400 | 2 | 50 | 36 | 30 |
| Example 3 | 400 | 2 | 50 | 12 | 30 |
| Example 4 | 400 | 2 | 50 | 24 | 2 |
| Example 5 | 400 | 2 | 50 | 24 | 5 |
| Example 6 | 400 | 2 | 50 | 24 | 65 |
| Comparative Example 1 | 400 | 66 | 80 | 168 | 30 |
| Comparative Example 2 | 400 | 0.1 | 30 | 8 | 30 |
| Comparative Example 3 | 400 | 2 | 50 | 24 | 30 |

**[Table 2]**

| | Imide group | Amide group | Carboxyl group | Carbonyl group | Evaluation 2 | Evaluation 3 | Evaluation 4 | Evaluation 5 | Evaluation 6 | Evaluation 7 |
|---|---|---|---|---|---|---|---|---|---|---|
| Example 1 | Presence | Presence | Presence | Presence | Very Good | Very Good | Very Good | Very Good | Very Good | Very Good |
| Example 2 | Presence | Presence | Presence | Presence | Very Good | Good | Good | Very Good | Good | Good |
| Example 3 | Presence | Presence | Presence | Presence | Good | Good | Good | Good | Good | Good |
| Example 4 | Presence | Presence | Presence | Presence | Very Good | Very Good | Very Good | Very Good | Very Good | Very Good |
| Example 5 | Presence | Presence | Presence | Presence | Very Good | Very Good | Very Good | Very Good | Very Good | Very Good |
| Example 6 | Presence | Presence | Presence | Presence | Very Good | Very Good | Very Good | Very Good | Very Good | Very Good |
| Comparative Example 1 | Absence | Absence | Presence | Absence | Very Good | Bad | Bad | Bad | Bad | Bad |
| Comparative Example 2 | Presence | Presence | Absence | Presence | Bad | Bad | Bad | Bad | Very Good | Good |
| Comparative Example 3 | Presence | Presence | Presence | Presence | Bad | Bad | Bad | Bad | Bad | Bad |

| | | | | | | | | | | |
|---|---|---|---|---|---|---|---|---|---|---|
| Evaluation 2: solubility Evaluation 3: storage stability Evaluation 4: low-temperature curability Evaluation 5: adhesiveness Evaluation 6: heat resistance Evaluation 7: flame retardance | | | | | | | | | | |

### [Examples 7 to 9]

In Examples 7 to 9, the storage stability and the like of the imide group-containing compounds were respectively evaluated in the same manner as in Example 1 except that the viscosity stabilizer blended with the imide group-containing compound solution in Example 1 was changed to phytic acid and also the blending amount thereof was 1% by weight, 2% by weight, and 3% by weight, respectively. The evaluation results thus obtained are presented in Table 3.

### [Examples 10 to 12]

In Examples 10 to 12, the storage stability and the like of the imide group-containing compounds were respectively evaluated in the same manner as in Example 1 except that the viscosity stabilizer blended with the imide group-containing compound solution in Example 1 was changed to trimethyl orthoformate and also the blending amount thereof was 1% by weight, 2% by weight, and 3% by weight, respectively. The evaluation results thus obtained are presented in Table 3.

### [Examples 13 to 15]

In Examples 13 to 15, the storage stability and the like of the imide group-containing compounds were respectively evaluated in the same manner as in Example 1 except that the viscosity stabilizer blended with the imide group-containing compound solution in Example 1 was changed to phytic acid and trimethyl orthoformate (blending proportion 1 : 1) and also the blending amount thereof was 1% by weight, 2% by weight, and 3% by weight, respectively. The evaluation results thus obtained are presented in Table 3.

**[Table 3]**

| | Viscosity stabilizer | Evaluation 2 | Evaluation 3 | Evaluation 4 | Evaluation 5 | Evaluation 6 | Evaluation 7 |
|---|---|---|---|---|---|---|---|
| Example 7 | 1% by weight phytic acid | Very Good | Good | Good | Good | Good | Good |
| Example 8 | 2% by weight phytic acid | Very Good | Good | Very Good | Very Good | Very Good | Good |
| Example 9 | 3% by weight phytic acid | Very Good | Very Good | Very Good | Very Good | Very Good | Very Good |
| Examples 10 | 1% by weight trimethyl orthoformate | Very Good | Very Good | Good | Good | Good | Good |
| Example 11 | 2% by weight trimethyl orthoformate | Very Good | Very Good | Very Good | Very Good | Very Good | Very Good |
| Example 12 | 3% by weight trimethyl orthoformate | Very Good | Very Good | Very Good | Very Good | Very Good | Very Good |
| Example 13 | 0.5% by weight trimethyl orthoformate/ 0.5% by weight phytic acid | Very Good | Very Good | Very Good | Very Good | Very Good | Very Good |
| Example 14 | 1% by weight trimethyl orthoformate/ 1% by weight phytic acid | Very Good | Very Good | Very Good | Very Good | Very Good | Very Good |
| Example 15 | 1.5% by weight trimethyl orthoformate/ 1.5% by weight phytic acid | Very Good | Very Good | Very Good | Very Good | Very Good | Very Good |

| | | | | | | | |
|---|---|---|---|---|---|---|---|
| Evaluation 2: solubility Evaluation 3: storage stability Evaluation 4: low-temperature curability Evaluation 5: adhesiveness Evaluation 6: heat resistance Evaluation 7: flame retardance | | | | | | | |

### [Example 16]

In Example 16, an aqueous solution of the imide group-containing compound was prepared as the imide group-containing compound solution, and further the combined effect of an amine compound (tertiary amine) as a viscosity stabilizer was confirmed.

In other words, the processes (1) to (3) were conducted as described in the preparation of the imide group-containing compound solution of Example 1 so as to obtain a granular imide group-containing compound (average particle size: 5 µm).

Subsequently, as the process (4), 100 g of the granular imide group-containing compound and 400 g of N-methyl-2-pyrrolidone were introduced into a vessel equipped with a stirrer and a uniform organic solvent solution of the imide group-containing compound was prepared.

Subsequently, 1 g of perfluoroalkyl ethylene oxide adduct as a nonionic surfactant was blended with respect to 500 g of the organic solvent solution of imide group-containing compound thus obtained.

Finally, an aqueous solvent (water) was gradually blended and the water content was adjust to be 60% with respect to the total amount while stirring with a homomixer so as to obtain an emulsion type aqueous solution (solid content concentration: 30% by weight) containing an imide group-containing compound with an average particle size in the range of from 0.1 to 1.0 µm.

Subsequently, 0.06 g of trimethyl orthoformate as a viscosity stabilizer and 0.03 g of trimethylamine as an amine compound (tertiary amine) were blended with respect to 100 g of the aqueous solution of imide group-containing compound thus obtained, thereby preparing the aqueous solution of imide group-containing compound of Example 16.

The evaluation on the storage stability and the like of the aqueous solution of imide group-containing compound thus obtained was performed in the same manner as in Example 1. The results thus obtained are presented in Table 4.

### [Example 17]

In Example 17, the aqueous solution of imide group-containing compound was prepared in the same manner as in Example 16 except that triethyl orthoformate and an amine compound were blended as the viscosity stabilizer instead of trimethyl orthoformate and an amine compound.

The evaluation on the storage stability and the like of the aqueous solution of imide group-containing compound thus obtained was performed in the same manner as in Example 1. The results thus obtained are presented in Table 4.

### [Example 18]

In Example 18, the aqueous solution of imide group-containing compound was prepared in the same manner as in Example 16 except that only trimethyl orthoformate was blended as the viscosity stabilizer instead of trimethyl orthoformate and an amine compound.

The evaluation on the storage stability and the like of the aqueous solution of imide group-containing compound thus obtained was performed in the same manner as in Example 1. The results thus obtained are presented in Table 4.

### [Example 19]

In Example 19, the aqueous solution of imide group-containing compound was prepared in the same manner as in Example 17 except that only triethyl orthoformate was blended as the viscosity stabilizer instead of triethyl orthoformate and an amine compound.

The evaluation on the storage stability and the like of the aqueous solution of imide group-containing compound thus obtained was performed in the same manner as in Example 1. The results thus obtained are presented in Table 4.

**[Table 4]**

| | Viscosity stabilizer | Evaluation 2 | Evaluation 3 | Evaluation 4 | Evaluation 5 | Evaluation 6 | Evaluation 7 |
|---|---|---|---|---|---|---|---|
| Example 16 | 2% by weight trimethyl orthoformate/ 1% by weight amine compound | Very Good | Very Good | Very Good | Very Good | Very Good | Very Good |
| Example 17 | 2% by weight triethyl orthoformate/ 1% by weight amine compound | Very Good | Very Good | Very Good | Very Good | Very Good | Very Good |
| Example 18 | 1% by weight trimethyl orthoformate | Very Good | Very Good | Good | Good | Good | Good |
| Example 19 | 1% by weight triethyl orthoformate | Very Good | Very Good | Very Good | Very Good | Very Good | Very Good |

| | | | | | | | |
|---|---|---|---|---|---|---|---|
| Evaluation 2: solubility Evaluation 3: storage stability Evaluation 4: low-temperature curability Evaluation 5: adhesiveness Evaluation 6: heat resistance Evaluation 7: flame retardance | | | | | | | |

### [Example 20]

In Example 20, an imide group-containing compound solution containing the imide group-containing compound (compound A) obtained in Example 1 was coated on an aluminum foil having a thickness of 3 µm using a bar coater, and then thermally cured under the condition of 150°C and 30 minutes so as to form a composite film of a polyimide having a thickness of 10 µm and a metal foil having a thickness of 20 µm, and the evaluation on the appearance thereof was performed.

As a result, it was confirmed that a polyimide film excellent in transparency was uniformly and firmly formed on an aluminum foil even if it was colored in light yellow, respectively.

Moreover, the flame retardance thereof was evaluated in accordance with UL 94 standard in the same manner as in Example 1 and it was confirmed that the V-0 condition was satisfied.

### [Example 21]

In Example 21, an imide group-containing compound solution containing the imide group-containing compound (compound A) obtained in Example 1 was coated on a polyester film as a substrate using a bar coater, and then thermally cured under the condition of 150°C and 30 minutes so as to form a composite film of a polyimide having a thickness of 10 µm and a polyester film having a thickness of 50 µm, and the evaluation on the appearance thereof was performed.

As a result, it was confirmed that a polyimide film excellent in transparency was uniformly and firmly formed on a polyester film although it was colored in light yellow.

Moreover, the flame retardance thereof was evaluated in accordance with UL 94 standard in the same manner as in Example 1 and it was confirmed that the V-0 condition was satisfied.

Meanwhile, it was separately confirmed that it was not possible to satisfy the V-0 condition as a matter of course and even the V-1 condition or the V-2 condition by the polyester film alone as a substrate.

### INDUSTRIAL APPLICABILITY

As described above, according to the invention, it is possible to obtain an imide group-containing compound solution which exhibits a small increase in viscosity during storage and excellent storage stability as well as is low-temperature curable and exhibits favorable solubility or adhesiveness by blending an imide group-containing compound having a specific structure having a predetermined infrared absorption peak, a solvent, and a predetermined viscosity stabilizer as well as partially hydrolyzing a polyimide molded article as the industrial waste.

In addition, an imide group-containing compound derived from the imide group-containing compound solution can be low-temperature cured into a polyimide film (polyimide resin), and it has been demonstrated that a polyimide resin exhibiting heat resistance or the like equivalent to that of a polyimide resin of the related art is obtained at a cost which is 1/10 or less of the cost for producing the polyimide resin of the related art.

Consequently, it is possible to provide a polyimide film (polyimide resin) significantly advantageously in terms of economy in the case of using the imide group-containing compound as all or part of the raw material of a polyimide resin.

Moreover, it is possible to obtain a heat-resistant film containing a composite polyimide film (polyimide resin) by only layering an imide group-containing compound derived from the imide-containing compound solution on the surface of a PET film, a PP film or the like.

Consequently, it is expected that the polyimide film (polyimide resin) obtained, or the like is suitably used in each of the uses as various kinds of polyimide molded articles such as a heat-resistant electrical part enclosure, a heat-resistant material for electronic part, a shield plate for heat-resistant electrical part (including a shield plate of a smartphone type mobile phone and a tablet mobile phone), a heat-resistant container, a heat-resistant machine part, and a heat-resistant automobile part.

### EXPLANATIONS OF LETTERS OR NUMERALS

- 10:: polyimide (polyimide film, polyimide film)
- 12:: another resin film
- 13:: composite resin film
- 14:: metal layer
- 14a:: first metal layer
- 14b:: second metal layer
- 14c:: via hole
- 16:: metal composite polyimide film and
- 20:: double-sided circuit board

## Claims

1. An imide group-containing compound solution comprising an imide group-containing compound obtained by partially hydrolyzing a polyimide molded article, a solvent, and a viscosity stabilizer,
wherein an absorption peak derived from an imide group is observed at a wavenumber of 1,375 cm⁻¹,
an absorption peak derived from an amide group is observed at a wavenumber of 1,600 cm⁻¹, and
an absorption peak derived from a carboxyl group is observed at a wavenumber of 1,413 cm⁻¹ in an infrared spectroscopy chart obtained by an infrared spectroscopic measurement of the imide group-containing compound, and
wherein the viscosity stabilizer is an orthocarboxylic ester and a chelating agent or either one of the two.

2. The imide group-containing compound solution according to claim 1, wherein the viscosity stabilizer is at least one selected from the group consisting of trimethyl orthoformate, triethyl orthoformate, tripropyl orthoformate, tributyl orthoformate, phytic acid, tannic acid, and gallic acid.

3. The imide group-containing compound solution according to claim 1 or 2, wherein a blending amount of the viscosity stabilizer is a value within the range of from 0.1 to 20 parts by weight with respect to 100 parts by weight of the imide group-containing compound.

4. The imide group-containing compound solution according to any one of claims 1 to 3, wherein the solvent is water and N-methyl-2-pyrrolidone or either one of the two.

5. The imide group-containing compound solution according to any one of claims 1 to 4, further comprising a thermosetting resin,
wherein the thermosetting resin is at least one kind selected from the group consisting of an epoxy resin, a fluorine resin, a phenol resin, a silicone resin, a urethane resin, an olefin resin, a polyester resin, and a polyamide resin.

6. The imide group-containing compound solution according to any one of claims 1 to 5, wherein a ratio of S1/S2 is a value within the range of from 2 to 10 when a height of an absorption peak derived from a benzene ring at a wavenumber of 1,500 cm⁻¹ is denoted as S1 and a height of the absorption peak derived from the imide group at the wavenumber of 1,375 cm⁻¹ is denoted as S2 in the infrared spectroscopy chart.

7. The imide group-containing compound solution according to any one of claims 1 to 6, wherein a ratio of S1/S3 is a value within the range of from 2 to 20 when a height of an absorption peak derived from a benzene ring at a wavenumber of 1,500 cm⁻¹ is denoted as S1 and a height of the absorption peak derived from the amide group at the wavenumber of 1,600 cm⁻¹ is denoted as S3 in the infrared spectroscopy chart.

8. The imide group-containing compound solution according to any one of claims 1 to 7, wherein a ratio of S1/S4 is a value within the range of from 8 to 30 when a height of an absorption peak derived from a benzene ring at a wavenumber of 1,500 cm⁻¹ is denoted as S1 and a height of the absorption peak derived from the carboxyl group at the wavenumber of 1,413 cm⁻¹ is denoted as S4 in the infrared spectroscopy chart.

9. A method for producing a polyimide film derived from an imide group-containing compound solution, the method comprising the following processes (1) and (2):
process (1): a process of forming a coated material by coating, on a substrate, an imide group-containing compound solution which includes an imide group-containing compound obtained by partially hydrolyzing a polyimide molded article, a solvent, and a viscosity stabilizer, the imide group-containing compound having an absorption peak derived from an imide group at a wavenumber of 1,375 cm⁻¹, an absorption peak derived from an amide group at a wavenumber of 1,600 cm⁻¹, and an absorption peak derived from a carboxyl group at a wavenumber of 1,413 cm⁻¹ in an infrared spectroscopy chart obtained by an infrared spectroscopic measurement of the imide group-containing compound, and the viscosity stabilizer being an orthocarboxylic ester and a chelating agent or either one of the two; and
process (2): a process of forming a polyimide film by heat-treating the coated material thus formed.

10. The method for producing a polyimide film according to claim 9, wherein the coated material is formed on a substrate having a surface treated.

11. The method for producing a polyimide film according to claim 9 or 10, wherein the coated material is formed on a substrate equipped with metal wiring.
